# EUROPÄISCHE PATENTSCHRIFT

(11) **EP 2 494 475 B1**
(45) Veröffentlichungstag und Bekanntmachung des Hinweises auf die Patenterteilung: **04.09.2019**
(21) Anmeldenummer: 11779381.0
(22) Anmeldetag: 31.10.2011
(51) Int. Cl.: G06F 16/25

(54) **SERVER EINES COMPUTERNETZWERKS**
SERVER OF A COMPUTER NETWORK
SERVEUR D'UN RÉSEAU D'ORDINATEURS

(30) Priorität: 25.11.2010 DE 102010052556; 25.11.2010 DE 202010017375 U; 22.07.2011 DE 102011108361; 22.07.2011 US 201161510816 P
(43) Veröffentlichungstag der Anmeldung: 05.09.2012
(73) Patentinhaber: Komet Group GmbH, 74354 Besigheim (DE)
(72) Erfinder: KRAMER, Niklas, 74321 Bietigheim-bissingen (DE); FRONIUS, Juergen, 74399 Walheim (DE)
(74) Vertreter: DREISS Patentanwälte PartG mbB
(86) Internationale Anmeldenummer: PCT/EP2011/069100
(87) Internationale Veröffentlichungsnummer: WO 2012/069284

(56) Entgegenhaltungen:
- WO-A2-2007/143005
- DE-A1-102004 048 695
- DE-T5-112004 000 349
- DE-T5-112004 000 349
- US-A1- 2003 023 336
- US-A1- 2006 004 786

## Beschreibung

Die vorliegende Anmeldung nimmt unter anderem auch die Priorität der U.S. Provisional Anmeldung mit dem Aktenzeichen 61/510,816, angemeldet am 22. Juli 2011 mit dem Titel "Server eines Computernetzwerks" in Anspruch. Ferner nimmt die vorliegende Anmeldung die Priorität der DE 10 2010 052 556.1, angemeldet am 25. November 2010 in Anspruch.

Die vorliegende Erfindung betrifft einen Server eines Computernetzwerks, der über eine Kommunikationsverbindung an das Netzwerk angeschlossen ist und auf dem eine Datenbankapplikation abläuft, die zum Sammeln und Verwalten von Daten ausgebildet ist.

Derartige Server sind in den unterschiedlichsten Ausführungsformen für die unterschiedlichsten Anwendungen aus dem Stand der Technik bekannt. Der Server kann als ein eigener Rechner ausgebildet sein, auf dem eine Serversoftware, sowie die Datenbankapplikation abläuft. Alternativ kann der Server auch als eine Serversoftware ausgebildet sein, die auf einem beliebigen Rechner abläuft. Dabei ist es denkbar, dass der Rechner nicht ausschließlich zum Abarbeiten der Serversoftware, sondern auch noch für andere Aufgaben vorgesehen ist.

Ferner ist es aus dem Bereich der Werkzeugmaschinen aus dem Stand der Technik bekannt, Werkzeuge und/oder Werkzeughalter mit einer eindeutigen Identifikation zu versehen, die beispielsweise zur Werkzeugverwaltung von der Werkzeugmaschine eingelesen und in dem Sinne interpretiert und verarbeitet werden kann, dass die Werkzeugmaschine zu jedem Zeitpunkt Kenntnis darüber hat, welche Werkzeuge in einem Werkzeugmagazin, und welche Werkzeuge in einer Werkzeugspindel bzw. im Einsatz befindlich sind. Die Identifikation des Werkzeugs beziehungsweise des Werkzeughalters ist beispielsweise derart angebracht, dass sie von der Werkzeugmaschine berührungslos eingelesen werden kann. Dies ist beispielsweise aus der EP 0 214 666 A2 bekannt. Ferner ist es aus der EP 0 462 279 A1 bekannt, in einem am Werkzeughalter vorgesehenen Speicher zusätzliche Informationen bezüglich des Werkzeugs abzuspeichern, die bei Bedarf von der Werkzeugmaschine ausgelesen und von einem auf der Werkzeugmaschine ablaufenden Steuerprogramm berücksichtigt werden können. Derartige Informationen sind beispielsweise die Länge, der Durchmesser oder die Abnutzung des Werkzeugs.

Die Identifikationsdaten eines Werkzeugs oder Werkzeughalters sind auf geeigneten Speichermitteln abgespeichert, beispielsweise in Form eines Bar-Codes, eines sogenannten QR-Codes, einer Datamatrix, oder eines RFID-Tags. Die Speichermittel für die Identifikationsdaten der Werkzeuge und/oder Werkzeughalter können auf diesen von außen angebracht und/oder in diese integriert werden. Die auf den Speichermitteln abgespeicherten Identifikationsdaten können auf optischem Wege, über eine Funkverbindung oder auf beliebig andere Weise berührungslos ausgelesen werden. Dazu verfügt die Werkzeugmaschine über geeignete Lesemittel.

DE 11 2004 000349 T5 offenbart eine Werkzeugmaschine, bei der zum Zweck der Betriebsverwaltung Werkzeugdaten erhoben und ausgewertet werden. Bei den aus dem Stand der Technik bekannten Werkzeugmaschinen ist die Auswertung und Verarbeitung der Identifikationsdaten der Werkzeuge beziehungsweise Werkzeughalter und von mit den Identifikationsdaten im Zusammenhang stehenden zusätzlichen Informationen über die Werkzeuge sachlich auf die jeweilige Werkzeugmaschine und räumlich auf den Einsatzort der jeweiligen Werkzeugmaschine beschränkt. Wenn beispielsweise in einer ersten Werkzeugmaschine zu einem bestimmten, anhand der Identifikationsdaten identifizierten Werkzeug, weitere Informationen, beispielsweise die Nutzungsdauer und/oder Nutzungsart des Werkzeugs, erfasst und abgespeichert werden, stehen diese Zusatzinformationen nach einem Wechsel des Werkzeugs in eine andere Werkzeugmaschine, eventuell sogar an einem anderen Einsatzort, dort nicht mehr zur Verfügung. Ein abgenutztes Werkzeug, das erstmals in eine bestimmte Werkzeugmaschine eingesetzt wird, wird dort als ein neuwertiges Werkzeug angesehen, da keinerlei Informationen über Nutzungsdauer und/oder Nutzungsart der Werkzeugs vorliegen.

Zudem ist Art und Umfang der Datenverarbeitung in den bekannten Werkzeugmaschinen sehr eingeschränkt. Die Datenverarbeitung beschränkt sich auf die Ermittlung von Informationen über die aktuelle Position eines Werkzeugs in der Werkzeugmaschine (im Werkzeugmagazin, in der Spindel oder in Benutzung) sowie auf die Ermittlung beziehungsweise Verarbeitung von Korrekturdaten für die einzelnen Werkzeuge in Abhängigkeit von ihren Abmessungen und ihrer Abnutzung. Eine werkzeugübergreifende, eine werkzeugmaschinenübergreifende oder gar eine Einsatzortübergreifende Datenverarbeitung, beispielsweise im Wege einer statistischen Auswertung von Informationen, Daten und/oder Betriebsparameter, die mehreren Werkzeugen mehrerer Werkzeugmaschinen eventuell sogar an verschiedenen Einsatzorten zugeordnet sind, kann im Stand der Technik nicht realisiert werden.

Bei der Entwicklung und Herstellung von Werkzeugen für Werkzeugmaschinen verlassen sich die Werkzeughersteller in der Regel auf ihre jahrelangen technischen Erfahrungen. Rückmeldungen aus dem Serieneinsatz der Werkzeuge zu den Werkzeugherstellern gibt es kaum. Allenfalls bei extrem unüblichem Werkzeugversagen kommt es zu Rückläufern an die Werkzeughersteller, die dort bezüglich des aufgetretenen Schadens an dem Werkzeug und der Ursachen untersucht werden. Die Untersuchung von Werkzeugen beim Werkzeughersteller ist jedoch auf einige wenige Einzelfälle beschränkt, und bei den Informationen über die Nutzung des Werkzeugs vor dem und zum Zeitpunkt des Schadenseintritts, die zur Ursachenermittlung nötig sind, ist der Werkzeughersteller auf die Angaben des Werkzeugnutzers angewiesen. Dadurch gestaltet sich die Ermittlung der Schadensursache häufig langwierig und arbeitsintensiv, manchmal ist eine genaue Ursachenermittlung sogar unmöglich oder es werden falsche Ursachen ermittelt, da die Angaben des Nutzers nicht korrekt bzw. unvollständig sind. Eine Berücksichtigung eines Werkzeugschadens und dessen Ursachen bei der zukünftigen Herstellung anderer Werkzeuge dieses Typs und/oder bei der Entwicklung und Herstellung zukünftiger Werkzeuge findet nur in ganz wenigen Ausnahmefällen statt, da sie sehr aufwendig und im Endeffekt unzuverlässig ist.

Ausgehend von dem beschriebenen Stand der Technik liegt der vorliegenden Erfindung die Aufgabe zu Grunde, den Lebenszyklus eines Werkzeugs für Werkzeugmaschinen besser, insbesondere lückenlos, und zuverlässiger beobachten zu können, um den Werkzeugherstellern und gegebenenfalls auch befugten Dritten zusätzliche Informationen jeglicher Art und zuverlässigere Informationen über Nutzungsdauer, Nutzungsart, Standzeiten etc. der Werkzeuge zu liefern, um so einen Mehrwert für Nutzer und Hersteller der Werkzeuge zu erzielen.

Zur Lösung dieser Aufgabe wird ausgehend von dem Server der eingangs genannten Art vorgeschlagen, dass der Server über das Kommunikationsnetzwerk unmittelbar oder mittelbar über weitere Server des Netzwerks mit mehreren, verschiedenen Unternehmen zugeordneten unternehmensinternen Werkzeugmaschinen und/oder anderen Geräten zum Nachschärfen, Nachbeschichten, Prüfen, Messen oder Bewerten von Werkzeugen und/oder Werkstücken in Verbindung steht, der Server Mittel zum Empfangen von Identifikationsdaten von Werkzeugen oder Werkzeughaltern der Werkzeugmaschinen und/oder von Identifikationsdaten und/oder Betriebsparametern der Werkzeugmaschinen und/oder von dynamischen Informationen bezüglich der Werkzeuge aufweist, in der Datenbankapplikation den Identifikationsdaten zugeordnete statische Informationen über die Werkzeuge abgelegt sind, und der Server Mittel zum Verarbeiten der empfangenen dynamischen Informationen, der statischen Informationen aus der Datenbank und/oder der Betriebsparameter der Werkzeugmaschinen aufweist, um aktualisierte Informationen über die Werkzeuge zu generieren, wobei der Informationsgehalt der aktualisierten Informationen über die Summe des Informationsgehalts der empfangenen dynamischen Informationen, der statischen Informationen aus der Datenbank und der Betriebsparameter hinausgeht.

Die anderen, verschiedenen Unternehmen zugeordneten unternehmensinternen Geräte zum Nachschärfen, Nachbeschichten, Prüfen, Messen oder Bewerten von Werkzeugen und/oder Werkstücken, mit denen der Server des Netzwerks vorzugsweise über weitere Server in Verbindung steht, sind bspw. beliebige Bearbeitungsmaschinen zur Wiederaufbereitung von Werkzeugen, Voreinsstellsysteme, Messgeräte, Beschichtungsanlagen, Beschriftungsgeräte, Lagerorte für Werkzeuge (z.B. Konsignationslager bzw. Werkzeugschränke mit buchener Entnahme), oder andere Erfassungs- und Kommunikationseinrichtungen wie bspw. MES/BDE (Betriebsdatenerfassungs)-Terminals, Mobiltelefone und PC-verwandte Geräte zum Abruf von Sachinformationen oder Schnittdatenempfehlungen etc. aus dem Server, also beliebige weitere Datenempfänger, -übermittler und/oder-verwerter.

Erfindungsgemäß wird also vorgeschlagen, nicht nur einzelne oder mehrere Werkzeugmaschinen innerhalb eines Unternehmens beziehungsweise eines Unternehmensstandortes, sondern mehrere über verschiedene, räumlich verteilte Unternehmen beziehungsweise Unternehmensstandorte hinweg verteilte Werkzeugmaschinen und/oder weitere Datenempfänger, -übermittler und/oder -verwerter miteinander zu vernetzen. Zum Vernetzen der Werkzeugmaschinen und/oder und/oder der weiteren Datenempfänger, -übermittler und/oder -verwerter miteinander wird ein Kommunikationsnetzwerk eingesetzt, das ein beliebiges Telekommunikationsnetzwerk, insbesondere das Internet, sein kann. Über das Kommunikationsnetzwerk können die Werkzeugmaschinen und/oder die weiteren Datenempfänger, -übermittler und/oder -verwerter beliebige Informationen übertragen, die in dem erfindungsgemäßen Server zusammenfließen. Die übertragenen Informationen sind insbesondere Identifikationsdaten der in den Werkzeugmaschinen und/oder den weiteren Datenempfänger, -übermittler und/oder -verwerter benutzten beziehungsweise vorhandenen Werkzeuge oder deren Werkzeughalter, Identifikationsdaten der Werkzeugmaschinen und/oder Betriebsparameter der Werkzeugmaschinen. Betriebsparameter sind beispielsweise die Drehzahl, der Vorschub und/oder die Einsatzzeit einer Werkzeugmaschine für ein bestimmtes Werkzeug. Die übertragenen Informationen können aber auch typologische Maschineninformationen, d.h. typbezogene Informationen zu den Fertigungssystemen sein, wie beispielsweise Bauweise der Werkzeugmaschinen (z.B. Gantry, Portal, Konsol, Transferstraßen, Rundtaktmaschinen, etc.), Anzahl von relativen Freiheitsgraden zwischen Spindel und Werkzeug (Anzahl der NC-Achsen), eine Steifigkeitsmatrix (z.B. relativ, absolut, statisch, dynamisch) oder Stabilitätsdiagramme, die tatsächlich mit den erfassten Werkzeugen verbunden werden können.

Die mittels der Erfindung gewonnenen Mehrwert-Informationen können zur Adaption bzw. Optimierung der Einsatzbedingungen und zur Verbesserung der Sicherheit der Werkzeuge eingesetzt werden. So können bspw. Informationen, insbesondere Nutzungsparameter, die in der Maschine während der Nutzung des Werkzeugs gesammelt werden, zur Anpassung der Einsatzbedingungen herangezogen werden, bspw. zum Erhöhen oder Verringern der Vorschubgeschwindigkeit, der Schnittgeschwindigkeit, der Standzeiten etc..

Anhand der typologischen Maschineninformationen kann in dem Server eine Maschinenklassifizierung vorgenommen werden, die dann den einzelnen Werkzeugen, Werkzeugtypen und Werkstoffen zugeordnet werden kann. Diese Ausdifferenzierung kann beispielsweise als Eingangsgrößenvektor einem neuronalen Netz zugeführt werden, das Vorhersagen über das verwendete Werkzeug, die Werkzeughalterung und/oder die Werkzeugmaschine treffen kann. Das neuronale Netz kann selbstlernend ausgebildet sein, so dass über die Zunahme der erfassten Fallbeispiele und eine Anpassung der Auswertekriterien zunehmend präzisere Vorhersagen getroffen werden können. Je mehr typologische Informationen von mehr Werkzeugmaschinen zur Verfügung stehen und ausgewertet werden können, desto zuverlässiger ist also die Vorhersage über das Werkzeug, die Werkzeughalterung und/oder die Werkzeugmaschine. Selbstverständlich kann auf Grundlage der typologischen Informationen auch auf andere Weise als mit einem neuronalen Netz eine Vorhersage getroffen werden, bspw. mittels einer Gruppenbildung und/oder einer statistischen Auswertung.

Die getroffenen Vorhersagen betreffen beispielsweise die voraussichtliche restliche Lebensdauer (Standzeit) des Werkzeugs oder der Werkzeugmaschine, eine zukünftige Abnutzung des Werkzeugs unter gegebenen Einsatzbedingungen, optimale Betriebsparameter der Werkzeugmaschine für den jeweiligen Anwendungsfall insbesondere unter Berücksichtigung der geschätzten zukünftigen Abnutzung des Werkzeugs, einen Zeitpunkt wann voraussichtlich ein Wechsel der Schneidplatten oder des gesamten Werkzeugs ansteht und beliebig andere in die Zukunft gerichtete werkzeug- und/oder maschinenbezogene Aussagen.

Anhand von bearbeitungsspezifischen, werkzeugspezifischen und insbesondere werkstoffspezifischen Informationen kann in dem Server eine Werkstück-/ Werkstoffklassifizierung vorgenommen werden, wobei die verschiedenen Klassen dann wiederum den Werkzeugen und Werkzeugtypen zugeordnet werden können. Dadurch ist eine wesentlich genauere und zuverlässigere Beurteilung zur Bearbeitbarkeit sowie der voraussichtlichen Lebensdauer (Standzeit) des Werkzeugs oder der Werkzeugmaschine möglich.

Die den Werkzeugen beziehungsweise den Werkzeughalter zugeordneten Identifikationsdaten sind in an sich aus dem Stand der Technik bekannter Weise auf geeigneten Speichermitteln abgespeichert, die auf oder in dem Werkzeug beziehungsweise dem Werkzeughalter angeordnet sind und durch geeignete Lesemittel, wie bspw. logistische Lesegeräte aus den Bereichen Lager-/ Bestandsverwaltung (z.B. auch für Inventurzwecke, etc.), der Werkzeugmaschine berührungslos ausgelesen werden können. Selbstverständlich ist es auch denkbar, separate Lesemittel vorzusehen, die zum Zwecke der Übertragung der eingelesenen Informationen an die Werkzeugmaschinen angeschlossen sind. Ebenso ist es denkbar, dass die Werkzeugmaschine die Identifikationsdaten mittels berührender Verfahren, z.B. mittels eines Tastmusters, einliest. Somit hat jede Werkzeugmaschine jederzeit einen Überblick darüber, welche Werkzeuge in der Werkzeugmaschine vorhanden sind, sowie über die Position der Werkzeuge in den Werkzeugmaschinen, insbesondere welche Werkzeuge im Einsatz sind beziehungsweise waren. Diese Informationen sowie weitere Informationen werden von den Werkzeugmaschinen über das Kommunikationsnetzwerk an den Server übertragen.

Ferner ist es denkbar, dass die den Werkzeugen beziehungsweise den Werkzeughalter zugeordneten Identifikationsdaten von einem Voreinstellgerät oder einem Werkzeugverwaltungsprogramm eingelesen werden. Mittels eines Voreinstellgeräts kann ein Werkzeug vor dem Einsatz in einer Werkzeugmaschine vermessen werden, bspw. im Hinblick auf die Schneidpositionen des Werkzeugs. Dazu sind in dem Voreinstellgerät statt eines Werkstücks Messgeräte vorgesehen. Das Voreinstellgerät ermittelt Korrekturwerte, die beim Einsatz des Werkzeugs in der Werkzeugmaschine berücksichtigt werden. Dazu kann in der Werkzeugmaschine entweder händisch eine den Korrekturwerten entsprechende Korrektur vorgenommen werden. Alternativ können die Korrekturwerte an die Werkzeugmaschine übertragen und dort bei Verwendung des Werkzeugs automatisch berücksichtigt werden. Die Übertragung der Korrekturwerte kann händisch oder über eine Datenkommunikationsverbindung zwischen Voreinstellgerät und Werkzeugmaschine erfolgen.

In der Datenbankapplikation des Servers sind den Identifikationsdaten zugeordnete statische Informationen über die Werkzeuge abgelegt. Die statischen Informationen sind beispielsweise Art des Werkzeugs, Hersteller, Herstelldatum, Abmessungen des Werkzeugs, Anzahl von Schneidplatten, Material, etc.. Als Werkzeuge werden insbesondere Werkzeuge zur spanenden Bearbeitung von Werkstücken verwendet. Die Art der Werkzeuge ist beispielsweise ein Bohrer, Drehmeißel, Fräser, Feindrehwerkzeug, Reibwerkzeug, Honwerkzeug, ein Schleifstein oder eine -scheibe, ein Reibstück zum Läppen eines Werkstücks, Finisherband oder -stein oder ein beliebig anderes Werkzeug zur spanenden Bearbeitung von Werkstücken aus Metall oder anderen Materialien. Selbstverständlich kann die Erfindung auch für andere Werkzeuge, bspw. für umformende Werkzeuge (Umformwerkzeuge), insbesondere Stanz-/ Prägewerkzeuge, aber auch für Tiefziehgesenke, Formen und Stempel etc. eingesetzt werden. Grundsätzlich kann die Erfindung für jede Art von Maschinenwerkzeug eingesetzt werden, das einen abnutzungsbedingten Verschleiß und somit bekannter endlicher Lebensdauer unterliegt. Art und Umfang der für ein bestimmtes Werkzeug in der Datenbankapplikation abgespeicherten statischen Informationen hängen stark von der Art des Werkzeugs ab, von der Kapazität der der Datenbankapplikation zugrundeliegenden Datenbank bzw. der Speichermedien, sowie von der gewünschten Genauigkeit und Zuverlässigkeit der zu berechnenden aktualisierten Informationen.

Außer den Identifikationsdaten, die eine eindeutige Identifikation der Werkzeuge beziehungsweise der Werkzeughalter in dem Server ermöglichen, übermitteln die Werkzeugmaschinen auch andere Informationen, beispielsweise dynamische Informationen über die Werkzeuge, an den Server. Die übermittelten dynamischen Informationen sind beispielsweise Nutzungsdauer und Nutzungsart eines Werkzeugs, Abnutzung eines Werkzeugs, Informationen über einen möglichen Wechsel von Schneidplatten, Material und Abmessungen des zu bearbeitenden Werkstücks, etc.. Es ist denkbar, dass einzelne Werkzeuge und/oder die zugeordneten Werkzeughalter mit zusätzlichen Sensoren ausgestattet sind, wobei die Sensorsignale ebenfalls als dynamische Informationen an den Server übermittelt werden können. So ist es beispielsweise denkbar, in einer Werkzeughalterung einen Kraft-, Schwingungs- oder Drehmomentsensor zu integrieren, der während der Benutzung des Werkzeugs die auf das Werkzeug wirkenden Kraftbeziehungsweise Drehmomentwerte erfasst und durch geeignete Sendemittel, vorzugsweise berührungslos, an entsprechende Lesemittel der Werkzeugmaschine überträgt. Von dort können diese Daten dann an den erfindungsgemäßen Server übermittelt werden. Dynamische Informationen können auch Informationen über die Umgebungsbedingungen am Einsatzort der Werkzeuge sein. So ist es beispielsweise denkbar, dass im Umfeld der Werkzeugmaschinen oder in den Werkzeugmaschinen selbst geeignete Sensoren bspw. zum Erfassen der Temperatur und/oder bei einer Feinstbearbeitung der Feuchtigkeit und anderer Größen vorgesehen sind. Des weiteren können Sensoren zur allgemeinen Prozessüberwachung zur Erfassung von dynamischen Prozessparametern während des Einsatzes des Werkzeugs eingesetzt werden. Auch diese Prozessparameter können an den Server übertragen werden. Ferner kann auch die Menge des mit einem bestimmten Werkzeug verwendeten Kühlmittels, Schleifmittels oder Läppmittels eine dynamische Information darstellen, die von der Werkzeugmaschine an den zentralen Server übertragen wird.

Anhand der empfangenen Identifikationsdaten für die verschiedenen Werkzeuge kann in dem Server durch die in der Datenbank abgespeicherten statischen Informationen genau und eindeutig ermittelt werden, welche Werkzeuge in welchen Werkzeugmaschinen derzeit vorhanden beziehungsweise im Einsatz sind. Der Server verfügt zudem über Mittel zum Verarbeiten der empfangenen dynamischen Informationen, der statischen Informationen aus der Datenbank und/oder der Betriebsparameter der Werkzeugmaschinen. Durch geeignetes Verarbeiten der im Server zusammenfließenden Informationen kann ein informativer Mehrwert generiert werden, der den Werkzeugherstellern und Dritten zur Verfügung gestellt werden kann. Die Verarbeitung der Informationen kann werkzeugspezifisch, das heißt für jedes der Werkzeuge gesondert, aber auch werkzeugübergreifend für mehrere gleichartige Werkzeuge (Werkzeugtypen) oder für verschiedene Werkzeuge, gegebenenfalls sogar für Werkzeuge von verschiedenen Werkzeugmaschinen in verschiedenen Unternehmen beziehungsweise an verschiedenen Unternehmensstandorten und/oder für Werkzeuge von unterschiedlichen Herstellern, erfolgen. Auf diese Weise können, bspw. durch neuronale Netze und/oder statistische Auswertung der zur Verfügung stehenden statischen und/oder dynamischen Informationen und Betriebsparameter, für bestimmte Werkzeugtypen von Abweichungen im Einzelfall unabhängige, repräsentative Durchschnittswerte ermittelt werden, die eine zuverlässige Aussage über die Qualität und Lebensdauer (Standzeit) der Werkzeuge dieses Werkzeugtyps erlauben. Diese Informationen können beispielsweise beim Werkzeughersteller berücksichtigt werden, um in Zukunft die Qualität, Sicherheit und/oder Standzeit der Werkzeuge dieses Werkzeugtyps anzupassen, das heißt zu erhöhen oder zu verringern.

Durch die vorliegende Erfindung wird gewissermaßen ein geschlossener Regelkreis von der Herstellung des Werkzeugs, über den Einsatz und die Verwendung des Werkzeugs wieder zurück zu dem Werkzeughersteller gebildet.

Der Wirkungskreislauf enthält als Regelstrecke den Einsatz eines Werkzeugs in einer Werkzeugmaschine. Dieser soll optimiert werden, bspw. im Hinblick auf möglichst lange Standzeiten des Werkzeugs. Als Regelgröße(n) wird/ werden die dynamischen Informationen für das eingesetzte Werkzeug durch eine Messeinrichtung, bspw. in Form von geeigneten Sensoren oder Modellen, erfasst und als Signalgröße(n) über das Netzwerk an den Server zurückgekoppelt. In dem Server wird im Rahmen der Datenverarbeitung der über das Netzwerk empfangenen dynamischen Informationen und der in dem Server abgespeicherten statischen Informationen und über einen Vergleich mit einer oder mehreren Führungsgrößen eine Regeldifferenz gebildet. Die Führungsgröße wird bspw. durch einen Verschleißwert gebildet, der von dem jeweiligen Einsatz des Werkzeugs sowie der Werkzeugmaschine, in der das Werkzeug eingesetzt wurde, dem Material des Werkstücks oder von anderen Parametern abhängig sein kann, und der bspw. möglichst klein bzw. gering sein soll. Die Führungsgröße(n) wird/ werden einem Regler zugeführt, der eines oder mehrere Stellglieder, bspw. in Form von Maschinen zur Herstellung von Werkzeugen des beobachteten Typs, derart ansteuert, dass bspw. der Verschleiß der Werkzeuge minimiert wird, ggf. unter Berücksichtigung des jeweiligen Einsatzes des Werkzeugs sowie der Werkzeugmaschine, in der das Werkzeug eingesetzt werden soll, des Materials des mit dem Werkzeug zu bearbeitenden Werkstücks oder anderer Parameter. Das unter den optimierten Bedingungen hergestellte Werkzeug kann dann wiederum in der beschriebenen Weise beobachtet werden.

Der Regelkreis hat Reaktionszeiten von mehreren Tagen oder länger. Nicht jede über das Netzwerk zu dem Server rückgekoppelte Information führt gleich zu einer Berücksichtigung bei der Ansteuerung eines Stellglieds. Vielmehr ist es denkbar, dass zunächst über einen gewissen Zeitraum, bspw. mehrere Stunden, Tage oder Wochen, Informationen gesammelt und verarbeitet werden, bevor sie Einfluss auf die Ansteuerung eines Stellglieds nehmen. Ebenso ist es denkbar, dass zunächst Informationen von einer gewissen Anzahl an verschiedenen Werkzeugen (vorzugsweise vom gleichen Werkzeugtyp) vorliegen müssen, bevor die gesammelten und verarbeiteten Informationen Einfluss auf die Ansteuerung eines Stellglieds nehmen.

Selbstverständlich ist die Ermittlung der Qualität bzw. Lebensdauer eines Werkzeugs eines bestimmten Typs nur eine von unzähligen Möglichkeiten zum Einsatz des erfindungsgemäßen Servers zum Generieren aktualisierter Informationen mit einem informativem Mehrwert gegenüber der Summer der Einzelinformationen. Über die ermittelte Lebensdauer eines bestimmten Werkzeugtyps kann, mittels der Information über die bisherige Einsatzdauer eines Werkzeugs dieses Typs, die voraussichtliche restliche Lebensdauer des Werkzeugs bzw. wann voraussichtlich ein Wechsel der Schneidplatten oder des gesamten Werkzeugs ansteht ermittelt werden. Die Produktion und Auslieferung entsprechender Werkzeuge sowie die Generierung damit im Zusammenhang stehender buchhalterischer Maßnahmen (z.B. Koordination des Wareneingangs, Lieferschein erstellen und versenden, Rechnung erstellen, Spedition beauftragen, Bestandsmengen abgleichen, Bestellvorgänge auslösen und überwachen, sowie Versandtrackingsysteme oder Bestellgeräte mit Daten versorgen) beim Werkzeugherstellen können dank dieser Informationen zuverlässig und frühzeitig koordiniert werden. Anhand der in der Datenbank des Servers gespeicherten Informationen ist der Bestand an Werkzeugen nicht nur bekannt, sondern auch lokalisiert.

Um die Konsistenz der in der Datenbank abgelegten Daten sicherstellen zu können, werden in der Datenbank vorzugsweise nur Roh- oder Grunddaten, d.h. keine im Bereich des Werkzeugs, der Werkzeugmaschine und/oder des Unternehmens bereits vorverarbeitete oder bewertete Daten, abgespeichert und zur Ermittlung der Mehrwert-Informationen herangezogen. Ansonsten bestünde die Gefahr, dass die Daten im Bereich des Werkzeugs, der Werkzeugmaschine und/oder des Unternehmens unterschiedlich vorverarbeitet oder bewertet würden, wodurch sich in der Datenbank Probleme mit der Konsistenz und Einheitlichkeit des Inhalts ergäben.

Dritte, denen ein Zugriff auf die in dem Server generierten aktualisierten Informationen ermöglicht werden kann, sind beispielsweise Unternehmen beziehungsweise Unternehmensstandorte, wo Werkzeuge eines bestimmten, von dem Server überwachten Typs eingesetzt werden, um möglichst umfassend über den aktuellen Zustand und die Zukunft (Lebensdauer) der von ihnen eingesetzten Werkzeuge informiert zu werden. Die durch die Verarbeitungsmittel des Servers getätigte umfangreiche Informationsauswertung und -verarbeitung ermöglicht nämlich nicht nur das Generieren aktualisierter Informationen über den Ist-Zustand der Werkzeuge, sondern erlaubt bei geeigneter Auswertung sogar zuverlässige Aussagen über die Zukunft des Werkzeugs, beispielsweise in Form der voraussichtlichen weiteren Standzeit des Werkzeugs bis es stumpf oder defekt ist. Insbesondere zum Generieren von Aussagen über die Zukunft der Werkzeuge ist es wichtig, auf Informationen von möglichst vielen Werkzeugen und die entsprechenden Betriebsparameter der Werkzeugmaschinen zugreifen zu können und diese auszuwerten, was erst durch den Einsatz des erfindungsgemäßen Servers möglich ist.

Es wäre ferner denkbar, dass Dritte, die Zugriff auf den Server und die dort abgelegten Informationen haben, die Möglichkeit erhalten, auf Basis der vorhandenen Datenbankfelder neue Funktionen oder Algorithmen zur Auswertung der in der Datenbank enthaltenen Informationen und Daten und zur Generierung von individuellen Mehrwert-Informationen bzw. ergänzende Datenbankfelder zu programmieren. Diese neuen Funktionen, Algorithmen oder Datenbankfelder können von den Dritten dann als Dienstleistung, bspw. im Rahmen einer Applikation (sog. "App") angeboten und vertrieben werden. Dazu wird die Datenbankstruktur offengelegt, wobei der Inhalt der Datenbank, d.h. die darin abgelegten Informationen und Daten, geheim bzw. anonym bleibt, d.h. den Dritten nicht zugänglich ist.

Darüber hinaus hat die vorliegende Erfindung eine Vielzahl weiterer Vorteile. Es ist beispielsweise möglich, über den individuellen Code, das heißt über die Identifikationsdaten des Werkzeugs beziehungsweise des Werkzeughalters, ein bestimmtes Werkzeug mit einer Vielzahl weiterer Informationen zu verknüpfen. Im Umfeld einer Qualitätssicherung beim Werkzeughersteller können durch eine Zuordnung von Messwerten, Produktionsdaten, etc. zu bestimmten Werkzeugen im Falle einer Reklamation seitens des Werkzeugnutzers die Ursachen für ein Werkzeugversagen einfacher gefunden werden. Zusätzliche Möglichkeiten bestehen beispielsweise in einem gezielten Rückruf einer bestimmten Charge hergestellter Werkzeuge. Im Umfeld der Produktion der Werkzeuge ist es beispielsweise denkbar, die individuellen Codes zu nutzen, um Werkstücke beziehungsweise die daraus gefertigten Werkzeuge zu identifizieren und durch die Produktion zu lenken (Entfall von Auftragspapieren).

Im Umfeld einer Wareneinganaskontrolle beim Kunden (Nutzer der Werkzeuge) kann die eindeutige Identifikation von Werkzeugen ein automatisches Herunterladen von Prüfprogrammen, Zeichnungen, technischen Spezifikationen, etc. für eine Eingangskontrolle der eingehenden Werkzeuge ermöglichen.

Im Umfeld einer Werkzeugvoreinstellung mittels eines Voreinstellgeräts können montierte Werkzeuge mittels der individuellen Codes identifiziert werden, den verschiedenen Werkzeugen bestimmte Einstellwerte, Schnittdatenempfehlungen etc. zugeordnet werden. Ferner ist es denkbar, abhängig von den individuellen Codes der Werkzeuge automatisch entsprechende Einstellprogramme für die Werkzeugmaschinen von dem erfindungsgemäßen Server herunterzuladen.

Im Umfeld einer NC-Programmierung beim Anwender in einem Unternehmen erlauben die individuellen Codes der Werkzeuge das automatische Herunterladen entsprechender Schnittdatenempfehlungen, Kollisionsbetrachtungsmodelle (2D, 3D), etc. für die Werkzeugmaschinen. Im Umfeld einer Nutzung der Werkzeuge ermöglichen die individuellen Codes die Ermittlung von Werkzeugeinsatzzeiten, Schnittdaten, Qualität der mit den Werkzeugen hergestellten Bauteile, etc., die Übermittlung dieser ermittelten Werte an den Server und die Zuordnung der ermittelten Werte zu einem bestimmten Werkzeug bzw. Werkzeugtyp. Es wäre sogar denkbar, anhand der in der Datenbank enthaltenen Informationen eine best-practice Empfehlung für das Werkzeug abzugeben. Da eine solche jedoch von dem umgebenden Werkzeugmaschinensystem abhängig ist, sollten zur Ermittlung einer best-practice Empfehlung Informationen über die Werkzeugmaschine (z.B. Hersteller, Typ, Baujahr, etc.) und ggf. andere nutzerabhängige Informationen abgespeichert sein.

Im Umfeld eines Einkaufs/einer Bearbeitung, ermöglichen die individuellen Codes das Identifizieren von zum Beispiel Ersatzaufnahmen oder Schneidplatten in anderen Werkzeugen. Außer den genannten Informationen können zusätzlich beliebige Informationen von Werkzeugherstellern, Händlern, Kunden (das sind die Anwender der Werkzeuge), etc. ermittelt und über den individuellen Code bestimmten Werkzeugen zugeordnet und bei der Generierung der aktualisierten Informationen berücksichtigt werden.

Im Umfeld eines Nachschleif-Service zum Schärfen stumpfer Werkzeuge oder Schneidplatten ermöglichen die individuellen Codes der Werkzeuge das automatische Herunterladen entsprechender Zeichnungen, Informationen über den Schneidstoff/die Beschichtung, Maschinenprogramme, der Anzahl der bereits erfolgten und/oder noch möglichen Nachschliffe, Kundeninformationen, Originalbestellnummern, etc.. Ferner können zur Werkzeugaufbereitung auch Informationen über das Werkzeug von dem Server abgerufen werden, bspw. Nutzungsparameter wie Einsatzzeitdauer, zurückgelegter Weg, Anzahl der bearbeiteten Werkstücke, Anzahl der während des bisherigen Betriebs erzeugten (Fehler-) Daten, etc.. Nach erfolgter Werkzeugaufbereitung werden vorzugsweise dem Werkzeug zugeordnete, definierte Daten in der Datenbank hinterlegt, aus denen hervorgeht, dass eine Aufbereitung des Werkzeugs durchgeführt wurde sowie Art und Umfang der Aufbereitung.

Jeder Identifizierungscode eines Werkzeugs beziehungsweise eines Werkzeughalters ist einmalig und kann für jedes Werkzeug bzw. sogar für jedes Einbauteil eines Werkzeugs eindeutig (hinsichtlich Werkzeugtyp sowie Einzelstück eines Werkzeugs) vergeben werden. Jeder Code ist einem bestimmten Datenbankeintrag eindeutig zugeordnet. Unter dem jeweiligen Datenbankeintrag sind alle Informationen gespeichert, die für einen bestimmten Werkzeugtyp, sofern die Einzelteile des Werkzeugs über einen individuellen Identifikationscode verfügen auch für jedes individuelle Einzelteil eines Werkzeugs, gelten beziehungsweise der Datenbankeintrag verweist auf diese Informationen. Der Identifizierungscode ist bspw. eine Zahl-/ Buchstabenkombination, die auf einem optisch, per Funk oder auf sonstige Weise automatisch auslesbaren Speicherelement (zum Beispiel RFID-Tag, Datamatrix, Bar-Code, QR-Code, etc.) gespeichert ist. Vorzugsweise kann das Speicherelement außer dem Identifizierungscode keine zusätzlichen Informationen speichern. Es ist jedoch auch denkbar, dass während des Einsatzes des Werkzeugs oder danach auch beliebige Informationen in dem Speicherelement abgespeichert werden können, bspw. Nutzungsparameter des Werkzeugs. Ein solches Speicherelement ist bspw. als ein beschreibbares RFID-Tag ausgebildet. Auch diese Informationen können eingelesen und an den Server übertragen und in der Datenbank abgelegt werden. Von dort können die Informationen bei der Werkzeugaufbereitung abgefragt und zur Optimierung der Werkzeugaufbereitung herangezogen werden.

Selbstverständlich ist es denkbar, dass nicht nur dem Werkzeug in seiner Gesamtheit, sondern auch den Einzelteilen des Werkzeugs jeweils individuelle Identifizierungscodes zugeordnet und auf den Einzelteilen abgespeichert sind. Einzelteile eines Werkzeugs sind bspw. der Werkzeughalter, die Werkzeugaufnahme, Schneidplatten bzw. Wendeschneidplatten, Verlängerungen, etc.. Die individuellen Codes der Einzelteile können ebenfalls eingelesen und in der Datenbank abgespeichert werden. In der Datenbank sind dann Informationen zu einer Vielzahl von Einzelteilen abgelegt. Die verschiedenen Werkzeuge werden in der Datenbank bzw. einer dieser zugeordneten Verarbeitungseinheit virtuell aus den Einzelteilen zusammengestellt, so dass stets bekannt ist, aus welchen Einzelteilen ein bestimmtes Werkzeug zusammengesetzt ist. Wenn dann ein Werkzeug aus verschiedenen Einzelteilen neu zusammengesetzt wird, bspw. in eine neue Aufnahme kommt, die Verlängerung getauscht wird oder eine Schneidplatte ausgewechselt wird, kann dies problemlos in der Datenbank aktualisiert werden.

Die Datenbank enthält relationale frei konfigurierbare Felder. Jedes Feld kann ergänzt und mit Informationen versehen werden. Für alle Felder der Datenbank existiert ein individuelles Lese-/Schreibrecht. Die Datenbank erlaubt das virtuelle Montieren und Demontieren von Werkzeugen beziehungsweise von einzelnen Baugruppen eines Werkzeugs, zum Beispiel Schneidplatten auf Bohrer in einer Aufnahme, aus der sich Ort/Position, Gesamtmaße, etc. des montierten Werkzeugs ergeben. Die Identifizierung erfolgt über jeden im Verbund bestehenden Identifizierungscode auf das Gesamtwerkzeug.

Anfragen von Dritten an den Server umfassen in der Regel einen Identifizierungscode oder eine sonstige Definition (z.B. Artikelnummer, Bezeichnung o.ä.) des entsprechenden Werkzeugs sowie einen Berechtigungscode der die Berechtigung des Dritten zum Erhalt der angeforderten Informationen belegt. Ein solcher Berechtigungscode kann dem Dritten vom Betreiber des Servers zugeteilt werden. Der Code wird bspw. anhand von Informationen über den Standort des abrufenden Geräts, Informationen zur Identifizierung des abrufenden Geräts und der abgerufenen Informationen generiert. So kann dann kundenspezifisch eine Einkaufsinformation oder eine Geometrieinformation geliefert werden. Ein Missbrauch bzw. eine Passworteingabe wäre unterbunden und auch eine Umstellung des Geräts (Verkauf eines Gebrauchtgeräts an fremde Dritte) würde keinen missbräuchlichen oder unzulässigen Datenabruf erlauben. Erst wenn der Server die Berechtigung der anfordernden Stelle anhand des übermittelten Berechtigungscodes bestätigt, werden die gewünschten Informationen zu dem Werkzeug gemäß Identifizierungscode bzw. sonstiger Definition übermittelt. So kann zum Beispiel beim Kunden, das heißt beim Nutzer des Werkzeugs, ein Werkzeugvoreinstellgerät Typ, Beschreibung, Abmaß und andere Daten des Werkzeugs automatisch herunterladen. Ein Einkäufer kann dagegen am Beispiel eines Bohrergrundkörpers Typ, Stückpreis Bestellkonditionen und/oder eigenen Lagerbestand von Schneidplatten ermitteln. Diese Informationen erlauben es dem Einkäufer sogar, Planungsdaten, Reichweite, Fristen und andere Dispositionsdaten für die Lägerbewirtschaftung zu ermitteln.

Erfindungsgemäß werden die Informationen aus der Datenbank auf höherer Ebene verdichtet, um den informativen Mehrwert zu erhalten. Zum Beispiel kann beim Kunden oder Einkäufer die Anzahl identischer Artikel (zum Beispiel Werkzeuge oder Schneidplatten) ermittelt werden. Dazu muss auch ein Code eines Einsatzortes des Werkzeugs einer bestimmten Hierarchie flexibel zugeordnet werden können. Beispielsweise sollte der Code des Einsatzortes berücksichtigen, wenn ein Einstellgerät in einem Werk A eines Kunden B steht, verkauft wird und dann in einem anderen Werk C oder bei einem anderen Kunden D steht. Das neue Werk C oder der andere Kunde D kann eine aktualisierte Information sein, die zur Aktualisierung des Datenbestands in der Datenbank abgespeichert wird.

Schließlich ist es denkbar, dass Dritte, beispielsweise Werkzeughersteller, Kunden (Nutzer der Werkzeuge) oder beliebig andere, Daten und Informationen an den Server zurück übertragen, die abhängig von der Schreib-/Lesestelle im Datenbankeintrag gespeichert werden. So ist es beispielsweise denkbar, dass die verwendete Schneidplatte sowie Schnittdaten in Abhängigkeit von verwendetem Bohrer und verwendeter Maschine abgespeichert werden. Beim Einsatz des gleichen Bohrers auf einer anderen Maschine werden unter Umständen andere Schneidplatten eingesetzt und es ergeben sich andere Schnittdaten.

Durch die Verknüpfung von Schneidplatten, Aufnahmen, Werkzeugen sowie Voreinstellgeräten und Werkzeugmaschinen lassen sich - auch anonymisiert - auf verdichteter Ebene interessante Informationen zum Nutzungsverhalten der Kunden erheben. Diese umfassen unter anderem Nutzungsfrequenz, Einsatzdauer, Wechselzeiten etc.. Hierbei ist sowohl ein im Vergleich zur Historie verändertes Einsatzverhalten sowie auch eine vergleichende Bewertung zwischen verschiedenen Einsatzorten für die Werkzeuglieferanten hoch interessant. Beispielsweise können Streubreiten von Verwendungszeiten, signifikante Unterschiede zum Beispiel auf Länderebene, maschinen- oder kundenspezifisch, etc. ausgewertet werden. Auch sind konkrete Studien über die kundenseitig erlebten Verbesserungen durch Produktinnovationen möglich.

All diese im Server zusammenfließenden Informationen können durch geeignete statistische Analysen der auf dem zentralen Server befindlichen Daten und Informationen ermittelt und ausgewertet werden. Diese Informationen haben dann für die Werkzeughersteller und beliebige Dritte einen beträchtlichen Informationswert, der diesen im Rahmen eines Betreibermodells beispielsweise kostenpflichtig oder als Serviceleistung zur Verfügung gestellt und zugänglich gemacht werden kann. Bei Einsatz der vorliegenden Erfindung beim Endkunden (den Nutzern der Werkzeuge) erlaubt das Modell den Werkzeugherstellern und Dritten zusätzlich, Rückschlüsse auf realisierte Produktivitätssteigerungen zu ziehen. Dies kann für Preisverhandlungen mit den Kunden genutzt werden oder sogar als Basis für eine zukünftige Preisentwicklung vertraglich vereinbart werden. Wird das System so ausgelegt, dass zum Beispiel in der Werkzeugmaschine ein Serverabgleich verpflichtend stattfindet, so dass ein Betrug im Sinne eines Unterbindens oder Umgehens der Daten- und Informationsübertragung von den Werkzeugmaschinen zu dem Server ausgeschlossen ist, kann eine Life-Cycle-Cost Betrachtung der Werkzeugmaschinen, der von diesen verwendeten Werkzeuge beziehungsweise Werkzeughalterungen erfolgen und sogar ein Verkaufsmodell auf Basis eines "Pay-Per-Part" (Bezahlung pro bearbeitetem Werkstück) bzw. "Pay-Per-Feature" (Bezahlen pro Geometrieelement), insbesondere "Pay-Per-Hole" (Bezahlen pro Bohrung) erarbeitet werden.

Weitere Merkmale und Vorteile der vorliegenden Erfindung werden nachfolgend unter Bezugnahme auf die Figuren näher erläutert. Dabei bilden die genannten Merkmale sowohl in Alleinstellung als auch in beliebiger Kombination miteinander den Gegenstand der vorliegenden Erfindung. Es zeigen:
Figur 1 ein Computernetzwerk mit einem erfindungsgemäßen Server gemäß einem ersten bevorzugten Ausführungsbeispiel;
Figur 2 ein Computernetzwerk mit einem erfindungsgemäßen Server gemäß einem zweiten bevorzugten Ausführungsbeispiel;
Figur 3 ein Computernetzwerk mit einem erfindungsgemäßen Server gemäß einem dritten bevorzugten Ausführungsbeispiel;
Figur 4 ein Computernetzwerk mit einem erfindungsgemäßen Server gemäß einem vierten bevorzugten Ausführungsbeispiel;
Figur 5 einen erfindungsgemäßen Server;
Figur 6 ein Ablaufdiagramm eines Verfahrens zum Verarbeiten von Informationen auf dem erfindungsgemäßen Server;
Figur 7 ein Ablaufdiagramm eines Verfahrens zum Abfragen der Informationen von dem erfindungsgemäßen Server gemäß einer ersten bevorzugten Ausführungsform;
Figur 8 ein Ablaufdiagramm eines Verfahrens zum Abfragen der Informationen von dem erfindungsgemäßen Server gemäß einer zweiten bevorzugten Ausführungsform; und
Figur 9 ein Ablaufdiagramm eines Verfahrens zum Abfragen der Informationen von dem erfindungsgemäßen Server gemäß einer dritten bevorzugten Ausführungsform.

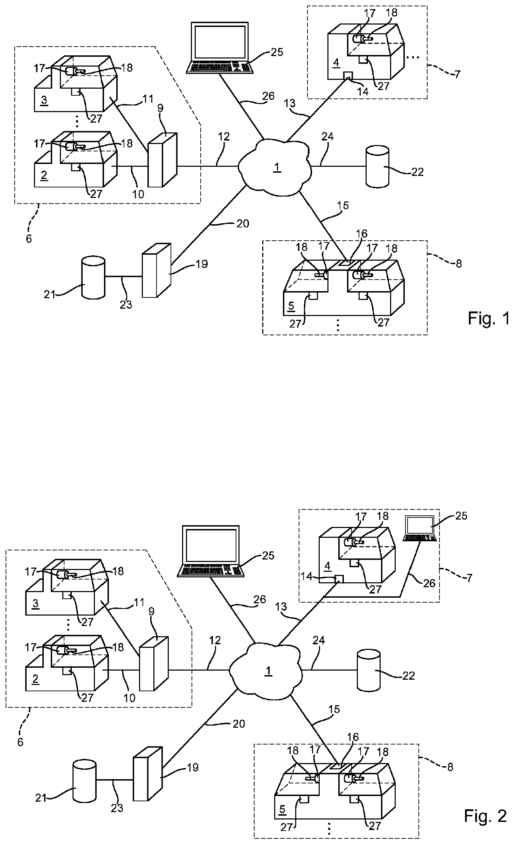

In Figur 1 ist ein Kommunikationsnetzwerk mit dem Bezugszeichen 1 bezeichnet. Das Kommunikationsnetzwerk 1 kann als ein beliebiges Netzwerk zum Übertragen von Daten, insbesondere als das Internet ausgebildet sein. Das Kommunikationsnetzwerk 1 ist in Figur 1 lediglich symbolisch als eine Wolke dargestellt. Die genaue Ausgestaltung des Kommunikationsnetzwerkes 1 ist dem Fachmann jedoch aus dem Stand der Technik bekannt.

An das Kommunikationsnetzwerk 1 sind verschiedene Teilnehmer in Form von Werkzeugmaschinen 2, 3, 4, 5 angeschlossen. Die Werkzeugmaschinen 2 bis 5 sind räumlich vorzugsweise an verschiedenen Standorten 6, 7, 8 angeordnet. Bei den unterschiedlichen Standorten 6 bis 8 kann es sich um verschiedene Unternehmen beziehungsweise Unternehmensstandorte handeln. Die Werkzeugmaschinen 2, 3 sind mittelbar über einen unternehmensinternen Server 9 an das Kommunikationsnetzwerk 1 angeschlossen. Die Datenübertragung zwischen den Werkzeugmaschinen 2, 3 und dem Server 9 über Datenübertragungsleitungen 10, 11 kann nach einem beliebigen Übertragungsprotokoll erfolgen. Insbesondere ist an eine Datenübertragung mittels eines unternehmensinternen proprietären Protokolls oder des IP (Internet Protocols) gedacht. Die Datenübertragung zwischen dem Server 9 und dem Kommunikationsnetzwerk 1 über eine Datenübertragungsverbindung 12 kann ebenfalls nach einem beliebigen Datenübertragungsprotokoll erfolgen. Sofern das Kommunikationsnetzwerk 1 als das Internet ausgebildet ist, erfolgt die Datenübertragung über die Datenverbindung 12 vorzugsweise nach dem IP. Somit ist der Server 9 vorzugsweise als ein Internetserver ausgebildet. Selbstverständlich können außer den dargestellten Werkzeugmaschinen 2, 3 auch noch weitere Werkzeugmaschinen an den Server 9 angeschlossen sein, was durch die drei Punkte zwischen den Werkzeugmaschinen 2 und 3 angedeutet ist. Die weiteren an den Server 9 angeschlossenen Werkzeugmaschinen können ebenfalls innerhalb des Standortes 6 oder räumlich davon getrennt, beispielsweise in einem anderen Unternehmen beziehungsweise Unternehmensstandort, angeordnet sein.

Die Werkzeugmaschine 4 sowie gegebenenfalls weitere Werkzeugmaschinen, was durch die drei Punkte rechts neben der Werkzeugmaschine 4 angedeutet ist, sind an dem Standort 7 angeordnet und über eine Datenübertragungsverbindung 13 unmittelbar an das Kommunikationsnetzwerk 1 angeschlossen. Die Datenübertragung zwischen der Werkzeugmaschine 4 und dem Kommunikationsnetzwerk 1 über die Datenverbindung 13 erfolgt nach einem beliebigen Protokoll, insbesondere nach dem IP. Um die zu übertragenden Daten nach dem verwendeten Übertragungsprotokoll aufzubereiten, verfügt die Werkzeugmaschine 4 deshalb über eine geeignete Schnittstelle 14 mit Hard- und Software zur Erfüllung der Schnittstellenfunktion.

Schließlich ist die Werkzeugmaschine 5, sowie gegebenenfalls weitere Werkzeugmaschinen, was durch die drei Punkte unterhalb der Werkzeugmaschine 5 angedeutet ist, an dem Standort 8 angeordnet. Die Werkzeugmaschine 5 sowie gegebenenfalls die weiteren Werkzeugmaschinen des Standortes 8 sind über eine Datenübertragungsverbindung 15 unmittelbar an das Kommunikationsnetzwerk 1 angeschlossen. Die Datenübertragung zwischen der Werkzeugmaschine 5 und dem Kommunikationsnetzwerk 1 über die Datenverbindung 15 kann nach einem beliebigen Protokoll, insbesondere nach dem IP, erfolgen. Zur Aufbereitung der zu übertragenden Daten verfügt die Werkzeugmaschine 5 deshalb über eine geeignete Schnittstelle 16, die Hard- und Software zur Erfüllung der Schnittstellenfunktion erfasst.

Selbstverständlich ist es denkbar, dass mehr als die gezeigten Werkzeugmaschinen 2 bis 5 sowie mehr als die gezeigten Standorte 6 bis 8 vorgesehen sind. Ferner ist es denkbar, dass die Werkzeugmaschinen eines bestimmten Standortes zum Teil mittelbar über einen Server und zum Teil unmittelbar an das Kommunikationsnetzwerk 1 angeschlossen sind. Die angeschlossenen Werkzeugmaschinen 2 bis 5 sind vorzugsweise als Werkzeugmaschinen zur spanenden Bearbeitung von Werkstücken ausgebildet. Die Werkzeugmaschinen 2 bis 5 sind insbesondere zum Bohren, Drehen, Fräsen, Honen, Schleifen, Läppen, Finishen oder Sägen ausgebildet und verfügen über entsprechende Werkzeuge. Jede der Werkzeugmaschinen 2 bis 5 hat üblicherweise mehrere Werkzeuge in einem Werkzeugmagazin abgelegt und wird für einen gewünschten Bearbeitungsschritt mit dem entsprechenden Werkzeug zur Bearbeitung des Werkstückes bestückt. Die Werkzeugmaschinen können über sogenannte Revolverhalterungen verfügen, die mit mehreren Werkzeugen bestückt sein können. Für die verschiedenen Bearbeitungsschritte und die unterschiedlichen Bearbeitungsarten des Werkstückes muss somit lediglich das gewünschte Werkzeug durch Bewegen des Werkzeugrevolvers in die Bearbeitungsposition gebracht werden, ohne dass für jeden Bearbeitungsschritt auf die im Werkzeugmagazin enthaltenen Werkzeuge zugegriffen werden muss. Es sind relativ komplexe Werkzeugmaschinen 2 bis 5 bekannt, die über zig verschiedene Werkzeuge in ihrem Werkzeugmagazin, sogar bis zu 100 Werkzeugen verfügen, und deren Werkzeugrevolver mehrere verschiedene Werkzeuge, bis zu 10 oder mehr Werkzeuge sind denkbar, aufnehmen kann. In Figur 1 ist stark vereinfacht für jede der Werkzeugmaschinen 2 bis 5 lediglich eine Werkzeughalterung 17 mit einem von dieser gehaltenen Werkzeug 18 dargestellt.

Darüber hinaus ist auch ein erfindungsgemäßer Server 19 über eine Datenübertragungsverbindung 20 an das Kommunikationsnetzwerk 1 angeschlossen. Der Server 19 hat Zugriff auf eine oder mehrere Datenbank 21, 22. Die Datenbanken 21, 22 können entweder unmittelbar an den Server 19 angeschlossen sein, wie dies beispielsweise bei der Datenbank 21 der Fall ist, die über eine Datenübertragungsverbindung 23 mit dem Server 19 in Verbindung steht. Es ist sogar denkbar, dass die Datenbank 21 integraler Bestandteil des Servers 19 ist. Alternativ können die Datenbanken 21, 22 auch an das Kommunikationsnetzwerk 1 angeschlossen sein, wie dies beispielsweise bei der Datenbank 22 der Fall ist, die über eine Datenübertragungsverbindung 24 mit dem Kommunikationsnetzwerk 1 in Verbindung steht. In diesem Fall greift der Server 19 über die Datenverbindungen 20, 24 und das Kommunikationsnetzwerk auf die Datenbank 22 zu. Selbstverständlich können auch mehr als die dargestellten Datenbanken 21, 22 an den Server 19 beziehungsweise das Kommunikationsnetzwerk 1 angeschlossen sein, auf die der Server 19 Zugriff hat. Schließlich ist ein Client 25 über eine Datenübertragungsverbindung 26 an das Kommunikationsnetzwerk 1 angeschlossen.

Als Grundlage für die vorliegende Erfindung sind die Werkzeughalter 17 und/oder die Werkzeuge 18 der Werkzeugmaschinen 2 bis 5 möglichst flächendeckend jeweils mit jedem der Werkzeughalter 17 beziehungsweise Werkzeuge 18 eindeutig zugeordneten Identifikationsdaten versehen. Die Identifikationsdaten umfassen eine beliebige Zahlen- und/oder Buchstabenkombination. Die Identifikationsdaten können in Form eines Bar-Codes, einer Datamatrix, eines QR-Codes, eines RFID-Etiketts oder ähnlichen Speichermitteln abgespeichert sein. Die Speichermittel sind vorzugsweise auf oder in den Werkzeughaltern 17 beziehungsweise den Werkzeugen 18 angeordnet. Die Werkzeugmaschinen 2 bis 5 verfügen über geeignete Einlesemittel, um die Identifikationsdaten der Werkzeughalterungen 17 beziehungsweise der Werkzeuge 18 berührungslos einzulesen. Die Einlesemittel 27 arbeiten bei Bar-Codes, Datamatrix, oder QR-Codes optisch, bei RFID-Etiketten vorzugsweise über Funk. Die Werkzeugmaschinen 2 bis 5 übermitteln die Identifikationsdaten der Werkzeughalter 17 beziehungsweise der Werkzeuge 18 an den Server 19.

In den Datenbanken 21, 22 sind den Identifikationsdaten zugeordnete statische Informationen über die Werkzeuge 18 abgelegt. Diese Informationen umfassen beispielsweise die Art der Werkzeuge 18 (zum Beispiel Bohrer, Drehmeisel, Fräser, Honwerkzeug, Schleifstein oder -scheibe, Reibwerkzeug, Finishband oder -stein oder Sägen), den Hersteller des Werkzeugs, das Material des Werkzeugs, Anzahl, Art und Ausführung von Wechselschneidplatten, Schnittdatenempfehlungen für das Werkzeug, Prüfprogramme für das Werkzeug, Zeichnungen oder technische Spezifikationen des Werkzeugs, Kollisionsbetrachtungsmodelle (2D, 3D), etc.. Anhand der empfangenen Identifikationsdaten der Werkzeuge 18 kann der Server 19 eindeutig ermitteln, um was für Werkzeuge es sich bei den beobachteten Werkzeugen bzw. bei den von den beobachteten Werkzeugmaschinen verwendeten Werkzeugen handelt. Für die betrachteten Werkzeuge 18 können Schnittdatenempfehlungen, Sachmerkmale gemäß DIN 4000 (zur Beschreibung eines Werkzeugs, um vergleichbare Werkzeuge zu finden), Kollisionsbetrachtungsmodelle, Prüfprogramme, Zeichnungen oder technische Spezifikationen oder anderes aus den Datenbanken 21, 22 entnommen und Dritten, die beispielsweise über den Client 25 Zugriff auf den Server 19 haben, übermittelt werden.

Außer den Identifikationsdaten der Werkzeuge 18 können auch noch beliebig andere Informationen von den Werkzeugmaschinen 2 bis 5 an den Server 19 übertragen werden. Solche Informationen umfassen beispielsweise Identifikationsdaten und/oder Betriebsparameter der Werkzeugmaschinen 2 bis 5. Anhand der Identifikationsdaten der Werkzeugmaschinen 2 bis 5 kann der Server 19 mittels den Identifikationsdaten zugeordneter zusätzlicher, in den Datenbanken 21, 22 abgelegter Informationen genau ermitteln, um welche Art von Werkzeugmaschinen es sich handelt. Die Betriebsparameter der Werkzeugmaschinen 2 bis 5 umfassen beispielsweise die Drehzahl, die Vorschubgeschwindigkeit, eine Einsatzzeit, etc.. Diese Art von Daten ist zeitlichen Änderungen unterworfen, so dass sie als dynamische Informationen bezeichnet werden.

Der Server 19 verfügt ferner über Mittel zum Verarbeiten der empfangenen dynamischen Informationen, der statischen Informationen aus den Datenbanken 21, 22 und/oder der Betriebsparameter der Werkzeugmaschinen 2 bis 5. Durch eine geeignete Auswertung und Verarbeitung der empfangenen Informationen und Parameter kann der erfindungsgemäße Server 19 aktualisierte Informationen über die Werkzeuge 18 generieren. Entscheidend ist dabei, dass bei dem Server 19 eine Fülle unterschiedlicher Informationen von einer Vielzahl von Werkzeugen 18 und Werkzeugmaschinen 2 bis 5 zusammengeführt wird. Diese Datenfülle und die Tatsache, dass sie an einem zentralen Ort, nämlich an dem Server 19, zur Verfügung steht, macht es erstmals möglich, aktualisierte Informationen über die Werkzeuge 18 zu generieren, wobei der Informationsgehalt der aktualisierten Informationen über die Summe des Informationsgehalts der empfangenen dynamischen Informationen, der statischen Informationen aus den Datenbanken 21, 22 und der Betriebsparameter hinausgeht. Der erfindungsgemäße Server bietet somit einen echten informationsmäßigen Mehrwert gegenüber dem Stand der Technik, der sowohl von den Werkzeugherstellern als auch von beliebigen Dritten zur Verbesserung und Optimierung der Produktions- und Dienstleistungsabläufe genutzt werden kann.

Der Client 25 kann an einer beliebigen Stelle im Netzwerk 1 angeordnet sein. So ist es bspw. denkbar, dass der Client 25 in einem Unternehmen an einem beliebigen Standort, bspw. dem Standort 7 (vgl. Figur 2), angeordnet ist. Das Unternehmen erhält über den Client 25 durch Zugriff auf den Server 19 über das Netzwerk 1 Mehrwert-Informationen bezüglich des Werkzeugs 18, bspw. eine Empfehlung für einen optimalen Einsatz ("best-practice") des Werkzeugs 18, Schnittdatenempfehlungen, Kollisionsbetrachtungsmodelle (2D, 3D), etc..

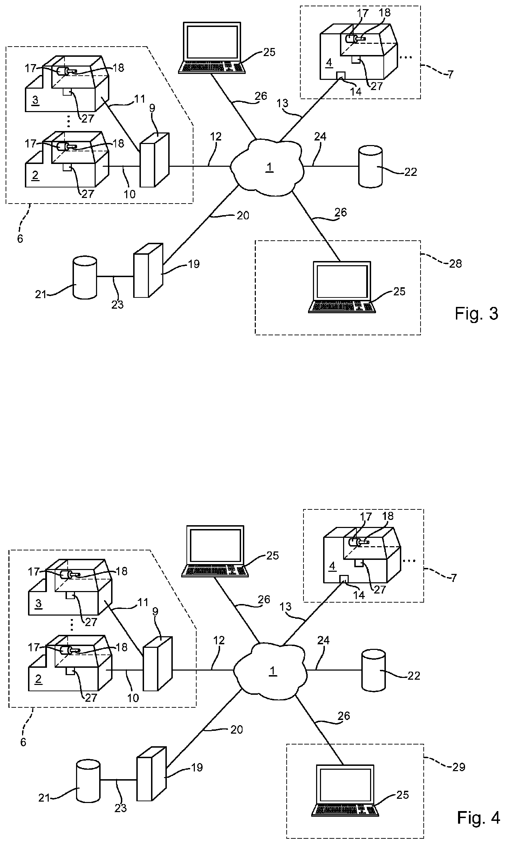

Ebenso wäre es denkbar, dass der Client 25 bei einem Werkzeughersteller 28 (vgl. Figur 3) angeordnet ist. Im Umfeld einer Qualitätssicherung beim Werkzeughersteller 28 können durch eine Zuordnung von Messwerten, Produktionsdaten, etc. zu bestimmten Werkzeugen 18 im Falle einer Reklamation seitens des Werkzeugnutzers die Ursachen für ein Werkzeugversagen einfacher gefunden werden. Zusätzliche Möglichkeiten bestehen beispielsweise in einem gezielten Rückruf einer bestimmten Charge hergestellter Werkzeuge 18. Im Umfeld der Produktion der Werkzeuge 18 ist es beispielsweise denkbar, individuellen Codes der Werkzeuge 18 zu nutzen, um Werkstücke beziehungsweise die daraus gefertigten Werkzeuge 18 zu identifizieren und durch die Produktion zu lenken (Entfall von Auftragspapieren).

Schließlich wäre es auch denkbar, dass der Client 25 bei einem Nachschleif-Service 29 (vgl. Figur 4) angeordnet ist. Die individuellen Codes der Werkzeuge 18 ermöglichen ein Herunterladen entsprechender Zeichnungen, von Informationen über den Schneidstoff/ die Beschichtung, von Maschinenprogrammen, der Anzahl der bereits erfolgten und/oder noch möglichen Nachschliffe, von Kundeninformationen, von Originalbestellnummern, etc. von dem Server 19 über das Netzwerk 1. Ferner können zur Werkzeugaufbereitung auch Informationen über das Werkzeug 18 selbst von dem Server 19 abgerufen werden, bspw. Nutzungsparameter wie Einsatzzeitdauer, zurückgelegter Weg, Anzahl der bearbeiteten Werkstücke, Anzahl der während des bisherigen Betriebs erzeugten (Fehler-) Daten, etc.. Nach erfolgter Werkzeugaufbereitung werden vorzugsweise dem Werkzeug 18 zugeordnete, definierte Daten in der Datenbank 21; 22 hinterlegt, aus denen hervorgeht, dass eine Aufbereitung des Werkzeugs 18 durchgeführt wurde sowie Art und Umfang der Aufbereitung. Selbstverständlich können auch mehrere an beliebigen Standorten verteilt angeordnete Clients 25 Zugriff auf den Server 19 und die darin abgelegten Daten und Mehrwert-Informationen haben.

Die aktualisierten Daten mit dem Mehrwert an Informationsgehalt können von den Werkzeugmaschinen 2 bis 5 in dem Unternehmen, aber auch von außerhalb des Unternehmens angeordneten Werkzeugmaschinen, sowie von beliebigen Bearbeitungsmaschinen zur Wiederaufbereitung der Werkzeuge, Nachschleifmaschinen, Voreinstellgeräten, Messsystemen etc. genutzt werden.

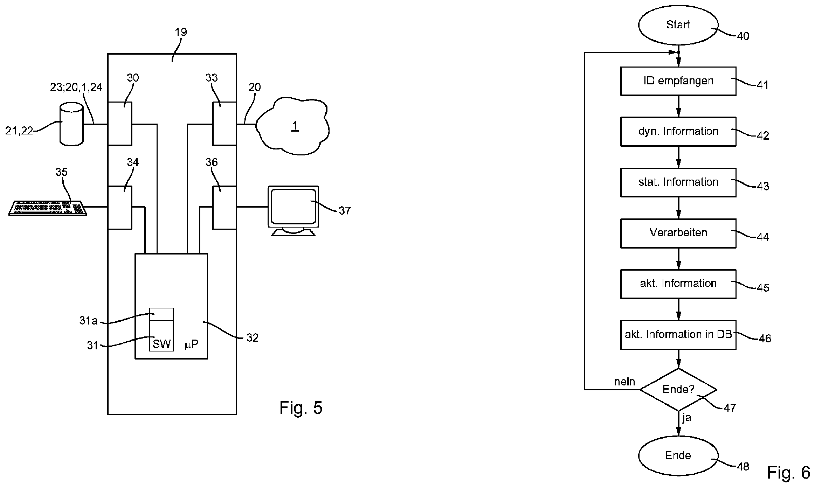

Der erfindungsgemäße Server 19 ist in Figur 5 im Detail dargestellt. Er umfasst eine Schnittstelle 30 zur Kommunikation und zum Datenaustausch mit den Datenbanken 21, 22. Die Schnittstelle 30 wird durch eine Datenbankapplikation, die Teil einer Software 31 ist, die auf einem Mikroprozessor 32 des Servers 19 abläuft, angesteuert und verwaltet. Darüber hinaus verfügt der Server 19 über eine Schnittstelle 33 zum Anschluss des Servers an das Kommunikationsnetzwerk 1. Die Schnittstelle 33 wird ebenfalls durch eine auf dem Mikroprozessor 32 ablauffähige Software 31 beziehungsweise durch einen Teil davon angesteuert und verwaltet. Ferner verfügt der Server 19 über eine Schnittstelle 34, über die Eingabemittel beispielsweise in Form einer Tastatur 35, einer Computermaus, angeschlossen sind. Die Ansteuerung und Verwaltung der Schnittstelle 34 erfolgt ebenfalls über einen Teil der Software 31, insbesondere über ein Betriebssystem des Mikroprozessors 32. Schließlich verfügt der Server 19 über eine Schnittstelle 36, über die Ausgabeeinheiten, beispielsweise in Form eines Computerbildschirms 37, angeschlossen sind. Auch die Schnittstelle 36 wird von einem Teil der Software 31, insbesondere von dem Betriebssystem des Mikroprozessors 32, angesteuert.

Die Verarbeitungsmittel des Servers 19, welche die empfangenen Identifikationsdaten der Werkzeuge 18 und der Werkzeugmaschinen 2 bis 5, die ebenfalls von den Werkzeugmaschinen 2 bis 5 empfangenen dynamischen Informationen sowie gegebenenfalls weitere Informationen oder Daten von den Werkzeugmaschinen 2 bis 5 und die anhand der empfangenen Identifikationsdaten aus den Datenbanken 21, 22 entnommenen statischen Informationen der entsprechenden Werkzeuge 18, sind in dem Server 19 in Form der Software 31 beziehungsweise eines Teils 31a davon realisiert. Die Software-Verarbeitungsmittel 31a sind auf dem Mikroprozessor 32 ablauffähig und realisieren die gewünschte Auswertung und Verarbeitung der genannten Informationen zur Generierung der aktualisierten Informationen über die Werkzeuge 18. Die Verarbeitung beziehungsweise Auswertung der Informationen durch den Softwareteil 31a umfasst insbesondere eine statistische Auswertung, die auch eine zuverlässige Aussage über die Zukunft der Werkzeuge 18 erlaubt. Anhand dieser Informationen über die Zukunft der Werkzeuge können Produktions- und Lieferzeiten von Ersatzwerkzeugen koordiniert und gesteuert werden, kann der Einsatz der Werkzeuge an mögliche Liefertermine von Ersatzwerkzeugen angepasst werden, um die Produktion aufrechtzuerhalten und nicht durch Ausfall der Werkzeuge zum Erliegen zu bringen. Die aktualisierten Informationen können auch Angaben über Einsatzdauer und Einsatzart der Werkzeuge 18 umfassen sowie die daraus jeweils resultierenden Standzeiten der Werkzeuge 18.

Die in dem Server 19 generierten aktualisierten Informationen mit dem darin enthaltenen Mehrwert können in einer oder mehreren der Datenbanken 21, 22 abgespeichert werden. Denkbar ist es auch, dass die aktualisierten Informationen oder ein Teil davon an die Werkzeugmaschinen 2 bis 5 zurück übertragen werden. Ebenfalls denkbar ist es, dass Dritte über den Client 25 Zugriff auf die in den Datenbanken 21, 22 abgelegten Informationen, einschließlich der aktualisierten Informationen, haben. Auf diese Weise können für die gewünschten Werkzeuge 18 Werkzeugeinsatzzeiten, Schnittdaten, Kollisionsbetrachtungsmodelle, Prüfprogramme, Zeichnungen oder technische Spezifikationen heruntergeladen werden. Dritte, die über den Client 25 Zugriff auf den Server 19 beziehungsweise die Datenbanken 21, 22 suchen, sind beispielsweise die Betreiber der Werkzeugmaschinen 2 bis 5 an den verschiedenen Standorten 6 bis 8. Alternativ können die Dritten auch die Hersteller der Werkzeuge 18 sein, die sich durch eine Berücksichtigung der aktualisierten Informationen eine Optimierung ihrer Herstellungsprozesse erhoffen. Bevor Dritte über den Client 25 Zugriff auf den Server 19 beziehungsweise die in den Datenbanken 21, 22 abgespeicherten Inhalte erhalten, kann der Server 19 deren Berechtigung prüfen. Auf diese Weise können die durch den Server 19 generierten aktualisierten Informationen sowie die in den Datenbanken 21, 22 abgespeicherten Daten bezüglich der Werkzeuge 18 Dritten kostenpflichtig angeboten werden, so dass der große Aufwand für die Installation der beschriebenen Infrastruktur und für die Anschaffung und Wartung der Infrastruktur erforderlichen Kosten zumindest teilweise durch die Nutzungsentgelte der Dritten beglichen werden.

Figur 6 zeigt eine Softwareroutine der Software 31, durch die die statischen und dynamischen Informationen sowie die Betriebsparameter der Werkzeugmaschinen 2 bis 5 sowie eventuell weitere Informationen verarbeitet und ausgewertet und die aktualisierten Informationen generiert werden. Das Verfahren umfasst beispielsweise die folgenden Schritte: Start des Verfahrens in Schritt 40. In einem Schritt 41 werden die Identifikationsdaten der Werkzeuge 18, der Werkzeughalter 17 und/oder der Werkzeugmaschinen 2 bis 5 empfangen. In einem Schritt 42 werden die dynamischen Informationen bezüglich der Werkzeuge 18 empfangen. Dann werden in einem Schritt 43 die den empfangenen Identifikationsdaten entsprechenden statischen Informationen aus einer oder mehreren der Datenbanken 21, 22 geladen. In Schritt 44 erfolgt dann die eigentliche Verarbeitung der empfangenen bzw. geladenen Daten und Informationen in dem Server 19 zur Generierung der aktualisierten Informationen 45. Die aktualisierten Informationen können entweder im Server 19 zur Abfrage durch einen Dritten, bspw. über den Client 25, vorgehalten oder in einem Schritt 46 in einer oder mehreren der Datenbanken 21, 22 abgespeichert werden. In einem Abfrageschritt 47 wird abgefragt, ob die Routine beendet werden soll, bspw. auf Veranlassung des Betreibers des Servers 19. Falls ja, wird die Verarbeitungsroutine in Schritt 48 beendet. Ansonsten wird wieder zu Schritt 41 verzweigt und die Schritte 41 bis 47 nochmals durchlaufen.

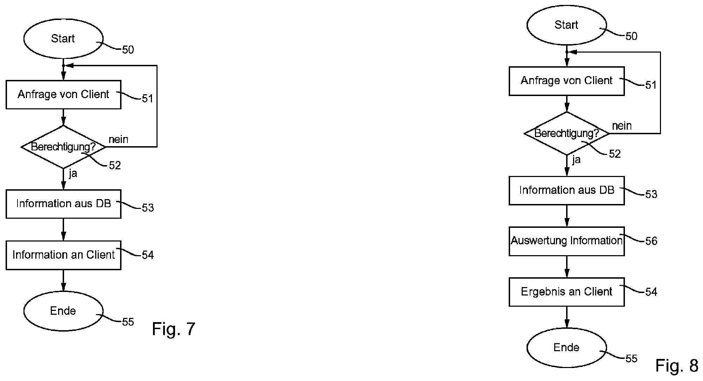

Figur 7 zeigt ein Ablaufdiagramm einer Softwareroutine der Software 31, die eine Abfrage an den Server 19 beziehungsweise die Datenbanken 21, 22 durch den Client 25 bewirkt. Das Verfahren umfasst beispielsweise die folgenden Schritte: Start des Verfahrens in Schritt 50. In einem Schritt 51 startet der Client 25 eine Abfrage an den Server 19. Die Abfrage umfasst einen Berechtigungscode des Client 25. In einem Abfrageschritt 52 wird die Gültigkeit des Berechtigungscodes abgefragt. Falls der Client 25 zum Herunterladen der angeforderten Informationen berechtigt ist, werden die angeforderten Informationen in einem Schritt 53 aus der Datenbank 21; 22 geladen und in einem Schritt 54 dem Client übermittelt. Ansonsten wird wieder zu dem Schritt 51 verzweigt. In einem Schritt 55 wird die Abfrageroutine beendet. Angaben über die angeforderten Informationen können entweder in der Anfrage des Client 25 enthalten sein oder aber in dem Server für den durch den Berechtigungscode identifizierten Kunden abgelegt sein.

In Figur 8 ist ein weiteres Ausführungsbeispiel eines Ablaufdiagramms einer Softwareroutine der Software 31 gezeigt, die eine Abfrage an den Server 19 beziehungsweise die Datenbanken 21, 22 durch den Client 25 bewirkt. Im Unterschied zu dem Ablaufdiagramm aus Figur 7 ist zwischen dem Schritt 53 (Informationen/Daten aus Datenbank 21, 22 laden) und dem Schritt 54 (aus Datenbank 21; 22 geladene Informationen/Daten an Client 25 übertragen) ein weiterer Schritt 56 vorgesehen. Der Client 25 kann zusammen mit seiner Anfrage (Schritt 51) gleich eine gewünschte Auswertung der Daten durch den Server 19 in Auftrag geben. Dazu sind in diesem Ausführungsbeispiel verschiedene Standard-Verarbeitungsalgorithmen in dem Server 19 vorhanden, von denen der Client 25 einen oder mehrere auswählen kann. Die von dem Client 25 ausgewählten Algorithmen werden zusammen mit der Anfrage an den Server 19 übermittelt. In dem Schritt 56 findet dann die Auswertung bzw. Verarbeitung der aus Datenbank 21; 22 geladenen Informationen/Daten nach den gewünschten Algorithmen statt. Das Ergebnis der Auswertung bzw. die verarbeiteten Daten werden dann in dem Schritt 54 an den Client 25 übermittelt. Dies hat den Vorteil, dass eine rechen- und speicherintensive Auswertung/ Verarbeitung der Informationen/Daten aus der Datenbank 21; 22 beim Client 25 nicht mehr erforderlich ist. Dieser kann somit kleiner und kostengünstiger ausgebildet werden. Unter Umständen kann auch Datenübertragungskapazität über das Netzwerk 1 eingespart werden, da nicht mehr sämtliche aus der Datenbank 21; 22 ausgelesenen Daten/ Informationen an den Client 25 übermittelt werden müssen, sondern nur noch das Ergebnis der Auswertung bzw. die verarbeiteten Daten.

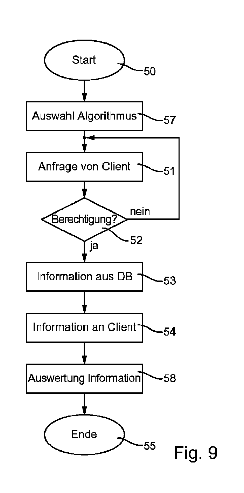

Gemäß einem weiteren Ausführungsbeispiel aus Figur 9 findet die Auswertung bzw. Verarbeitung der Daten/ Informationen aus der Datenbank 21; 22 nicht beim Server, sondern lokal beim Client 25 statt. Dazu wird zunächst beim Client 25 in einem Schritt 57 mindestens ein gewünschter Algorithmus zur Auswertung/ Verarbeitung von Daten ausgewählt. Die für den ausgewählten Algorithmus erforderlichen Daten/ Informationen werden zum Gegenstand einer Anfrage an den Client 25 gemacht, die in dem Schritt 51 übermittelt wird. Die für den ausgewählten Algorithmus benötigten Daten/ Informationen können entweder manuell vom Nutzer des Client 25 eingegeben oder vom Client 25 anhand des ausgewählten Algorithmus automatisch ermittelt werden. Die Verarbeitung der Anfrage beim Server 19 erfolgt in entsprechender Weise wie oben für das Ausführungsbeispiel aus Figur 7 beschrieben. Die von dem Server 19 an den Client 25 übermittelten Daten/ Informationen (Schritt 54) werden dann beim Client 25 gemäß dem zuvor in Schritt 57 ausgewählten Algorithmus ausgewertet/ verarbeitet, so dass der Client 25 nun über die gewünschten Informationen verfügt.

## Patentansprüche

1. Ein Server (19) eines Kommunikationsnetzwerks (1), der über eine Kommunikationsverbindung (20) an das Kommunikationsnetzwerk (1) angeschlossen ist und auf dem eine Datenbankapplikation mit Zugriff auf eine Datenbank (21; 22) abläuft, die zum Sammeln und Verwalten von Daten ausgebildet ist, wobei der Server (19) über das Kommunikationsnetzwerk (1) unmittelbar oder mittelbar über weitere Server (9) des Kommunikationsnetzwerks (1) mit mehreren, verschiedenen Unternehmen (6, 7, 8) zugeordneten unternehmensinternen Maschinen (2, 3, 4, 5) oder Geräten zum Einsatz oder zur Wiederaufbereitung von Werkzeugen (18) in Verbindung steht, **dadurch gekennzeichnet, dass** die Werkzeuge (18) zur spanenden Bearbeitung von Werkstücken ausgebildet sind, dass die Werkzeuge (18) jeweils mehrere Einzelteile umfassen, wobei zumindest einigen der Einzelteile individuelle Identifikationsdaten zugeordnet sind, dass der Server (19) Mittel zum Empfangen von Daten von Werkzeugen (18) der Maschinen (2, 3, 4, 5) oder der Geräte und/oder von dynamischen Informationen bezüglich der Werkzeuge (18) aufweist, wobei die Empfangsmittel zum Empfang von individuellen Identifikationsdaten der Einzelteile der Werkzeuge (18) ausgebildet sind, und der Server (19) Mittel für ein den entsprechenden Werkzeugen zugeordnetes Abspeichern der empfangenen Daten in der Datenbank (21, 22) aufweist, dass der Server (19) Mittel zum Verarbeiten der empfangenen Daten und weiterer in der Datenbank (21; 22) abgelegter Daten aufweist, um aktualisierte Daten über die Werkzeuge (18) zu generieren, wobei der Informationsgehalt der aktualisierten Daten über die Summe des Informationsgehalts der empfangenen Daten und der in der Datenbank (21; 22) abgelegten weiteren Daten hinausgeht, dass die Verarbeitungsmittel als aktualisierte Daten den Werkzeugen (18) entsprechende virtuelle Werkzeuge aus den den eingelesenen individuellen Identifikationsdaten entsprechenden Einzelteilen zusammenstellt, und dass der Server (19) Mittel zum Abspeichern der generierten aktualisierten Daten in der Datenbank (21; 22) aufweist.

2. Der Server (19) nach Anspruch 1, **dadurch gekennzeichnet, dass** die Maschine oder das Gerät zum Einsatz oder zur Wiederaufbereitung von Werkzeugen (18) eine Werkzeugmaschine (2, 3, 4, 5) und/oder ein anderes Gerät zum Nachschärfen, Nachbeschichten, Prüfen, Messen oder Bewerten des Werkzeugs (18) und/oder von Werkstücken umfassen.

3. Der Server (19) nach Anspruch 1 oder 2, **dadurch gekennzeichnet, dass** die von den Empfangsmitteln des Servers (19) empfangenen Daten von Werkzeugen (18) der Werkzeugmaschinen (2, 3, 4, 5) und/oder der anderen Geräte zum Wiederaufbereiten von Werkzeugen (18) und/oder Werkstücken Identifikationsdaten der Werkzeuge (18) der Werkzeugmaschinen (2, 3, 4, 5) und/oder der anderen Geräte zum Wiederaufbereiten von Werkzeugen (18) und/oder Werkstücken umfassen.

4. Der Server (19) nach Anspruch 2 oder 3, **dadurch gekennzeichnet, dass** die von den Empfangsmitteln des Servers (19) empfangenen Daten der Werkzeugmaschinen (2, 3, 4, 5) und/oder der anderen Geräte zum Wiederaufbereiten von Werkzeugen (18) und/oder Werkstücken Identifikationsdaten und/oder Betriebsparameter der Werkzeugmaschinen (2, 3, 4, 5) und/oder der anderen Geräte zum Wiederaufbereiten von Werkzeugen (18) und/oder Werkstücken, typologische Maschineninformationen und/oder Werkstück- und/oder Werkstoffinformationen umfassen.

5. Der Server (19) nach einem der Ansprüche 1 bis 4, **dadurch gekennzeichnet, dass** die in der Datenbank (21; 22) abgelegten weiteren Daten den von dem Server (19) empfangenen Daten zugeordnete statische Informationen über die Werkzeuge (18) umfassen.

6. Der Server (19) nach einem der Ansprüche 1 bis 5, **dadurch gekennzeichnet, dass** die Mittel zum Empfangen auch zum Empfang von Herstellerinformationen über die Werkzeuge (18) von an das Kommunikationsnetzwerk (1) angeschlossenen weiteren Servern von Herstellern der Werkzeuge (18) ausgebildet sind und dass die Mittel zum Verarbeiten zum Generieren der aktualisierten Informationen auch in Abhängigkeit von den Herstellerinformationen ausgebildet sind.

7. Der Server (19) nach einem der Ansprüche 1 bis 6, **dadurch gekennzeichnet, dass** die Mittel zum Empfangen auch zum Empfang von Dienstleisterinformationen über die Werkzeuge (18) von an das Kommunikationsnetzwerk (1) angeschlossenen weiteren Servern von Dienstleistern, welche Änderungen an den Werkzeugen (18) vornehmen, ausgebildet sind und dass die Mittel zum Verarbeiten zum Generieren der aktualisierten Informationen auch in Abhängigkeit von den Dienstleisterinformationen ausgebildet sind.

8. Der Server (19) nach einem der Ansprüche 1 bis 7, **dadurch gekennzeichnet, dass** der Server (19) Mittel zum Übertragen der generierten aktualisierten Daten an weitere Server von Werkzeugherstellern zur Aktualisierung von dort abgelegten Herstellerinformationen aufweist.

9. Der Server (19) nach einem der Ansprüche 1 bis 8, **dadurch gekennzeichnet, dass** in der Datenbank (21; 22) Software zur Programmierung der Werkzeugmaschinen (2, 3, 4, 5) und/oder der anderen Geräte zum Wiederaufbereiten von Werkzeugen (18) und/oder Werkstücken abgespeichert ist, wobei die Mittel zum Verarbeiten auch zum Generieren von aufgrund der aktualisierten Informationen aktualisierter Software ausgebildet sind, und der Server (19) Mittel zum Übertragen der aktualisierten Software an die Werkzeugmaschinen (2, 3, 4, 5) und/oder die anderen Geräte zum Wiederaufbereiten von Werkzeugen (18) und/oder Werkstücken über das Kommunikationsnetzwerk (1) aufweist.

10. Der Server (19) nach Anspruch 9, **dadurch gekennzeichnet, dass** die Software Schnittdatenempfehlungen, Einstellprogramme für die Werkzeugmaschinen (2, 3, 4, 5) und/oder Kollisionsbetrachtungsmodelle umfasst.

11. Der Server (19) nach einem der Ansprüche 1 bis 10, **dadurch gekennzeichnet, dass** die von den Verarbeitungsmitteln des Servers (19) generierten aktualisierten Informationen in die Zukunft gerichtete Aussagen über die verwendeten Werkzeuge (18), entsprechende Werkzeughalter (17) und/oder die Werkzeugmaschinen (2, 3, 4, 5) umfassen.

12. Der Server (19) nach einem der Ansprüche 1 bis 11, **dadurch gekennzeichnet, dass** die generierten, aktualisierten Informationen Werkzeugstandzeiten, Nutzungsfrequenz, Einsatzdauer, Wechselzeiten, Schnittdaten, Bauteilqualität von mit den Werkzeugen (18) hergestellten Bauteilen und/oder Daten über verwendete Schneidplatten umfassen.

13. Der Server (19) nach einem der Ansprüche 1 bis 12, **dadurch gekennzeichnet, dass** die Mittel zur Verarbeitung ausgebildet sind, um die empfangenen dynamischen Informationen, die statischen Informationen aus der Datenbank (21; 22) und/oder die Betriebsparameter der Werkzeugmaschinen (2, 3, 4, 5) mittels eines neuronalen Netzes, einer Gruppenbildung und/oder einer statistischen Auswertung zu verarbeiten.

14. Der Server (19) nach einem der Ansprüche 1 bis 13, **dadurch gekennzeichnet, dass** der Server (19) Mittel zum Übertragen von in der Datenbank (21; 22) abgespeicherten Daten und Informationen und/oder der generierten, aktualisierten Daten an mindestens einen über das Kommunikationsnetzwerk (1) mit dem Server (19) in Verbindung stehenden Client (25) aufweist.

15. Der Server (19) nach Anspruch 14, **dadurch gekennzeichnet, dass** der Server (19) Mittel zur Überprüfung einer Berechtigung des Client (25) zum Zugriff auf die in der Datenbank (21; 22) abgespeicherten Daten und Informationen und/oder die generierten, aktualisierten Daten aufweist.

16. Der Server (19) nach Anspruch 14 oder 15, **dadurch gekennzeichnet, dass** auf dem Server (19) eine grafische Benutzerschnittstelle vorgesehen ist, über die der Client (25) Zugriff auf die in der Datenbank (21; 22) abgespeicherten Daten und Informationen und/oder die generierten, aktualisierten Daten erhält.

17. Der Server (19) nach einem der Ansprüche 1 bis 16, **dadurch gekennzeichnet, dass** der Server (19) eine Regeleinrichtung eines geschlossenen Regelkreises bildet.

18. Der Server (19) nach Anspruch 17, **dadurch gekennzeichnet, dass** eine Regelstrecke des Regelkreises durch die Maschine oder das Gerät zum Einsatz des Werkzeugs (18), eine Messeinrichtung des Regelkreises durch einen Sensor und/oder ein Modell des Werkzeugeinsatzes und ein Stellglied des Regelkreises durch eine Maschine oder ein Gerät zur Herstellung mindestens eines Einzelteils eines Werkzeugs vom gleichen Typ wie das eingesetzte Werkzeug (18) gebildet ist, wobei die Messeinrichtung Daten des Werkzeugs (18) oder des Werkzeughalters (17) der Werkzeugmaschine (2, 3, 4, 5) und/oder Daten der Werkzeugmaschine (2, 3, 4, 5) und/oder dynamische Informationen bezüglich des Werkzeugs (18) erfasst und als Signalgröße(n) über das Kommunikationsnetzwerk (1) an den Server (19) überträgt, die Verarbeitungsmittel des Servers (19) anhand der empfangenen Daten bzw. Informationen, anhand der in der Datenbank (21; 22) abgelegten Daten und anhand mindestens einer Führungsgröße eine Regeldifferenz ermitteln, und die Verarbeitungsmittel des Servers (19) einen Regler aufweisen, der anhand der Regeldifferenz eine Signalgröße für das Stellglied ermittelt und an dieses überträgt.

## Claims

1. A server (19) for a communication network (1), which server is connected to the communication network (1) via a communication link (20) and has a database application running on it with access to a database (21; 22) that is designed for the purpose of collecting and managing data, wherein the server (19) is in contact via the communication network (1) directly or indirectly, via further servers (9) for the communication network (1), with a plurality of company-internal machines (2, 3, 4, 5) or appliances, associated with various companies (6, 7, 8), for the use or reprocessing of tools (18), wherein the tools (18) are designed for machining workpieces, wherein the tools (18) each comprise a plurality of individual parts, with at least some of the individual parts having associated individual identification data, wherein the server (19) has means for receiving data from tools (18) of the machines (2, 3, 4, 5) or the appliances and/or dynamic information regarding the tools (18), with the reception means being designed to receive individual identification data from the individual parts of the tools (18), and the server (19) having means for storing the received data in the database (21, 22) in association with the corresponding tools, wherein the server (19) has means for processing the received data and further data stored in the database (21; 22) in order to generate updated data about the tools (18), with the information content of the updated data going beyond the sum of the information content of the received data and the further data stored in the database (21; 22), wherein the processing means compile, as updated data, virtual tools that correspond to the tools (18) from the individual parts that correspond to the individual identification data that have been read in, and wherein the server (19) has means for storing the generated updated data in the database (21; 22).

2. The server (19) as claimed in claim 1, wherein the machine or the appliance for the use or reprocessing of tools (18) comprises a machine tool (2, 3, 4, 5) and/or another appliance for resharpening, recoating, examining, measuring or rating the tool (18) and/or workpieces.

3. The server (19) as claimed in claim 1 or 2, wherein the data received by the reception means of the server (19) from tools (18) of the machine tools (2, 3, 4, 5) and/or the other appliances for the reprocessing of tools (18) and/or workpieces comprise identification data for the tools (18) of the machine tools (2, 3, 4, 5) and/or the other appliances for the reprocessing of tools (18) and/or workpieces.

4. The server (19) as claimed in claim 2 or 3, wherein the data received by the reception means of the server (19) from the machine tools (2, 3, 4, 5) and/or the other appliances for the reprocessing of tools (18) and/or workpieces comprise identification data and/or operating parameters of the machine tools (2, 3, 4, 5) and/or the other appliances for the reprocessing of tools (18) and/or workpieces, typological machine information and/or workpiece and/or material information.

5. The server (19) as claimed in one of claims 1 to 4, wherein the further data stored in the database (21; 22) comprise static information about the tools (18) that is associated with the data received by the server (19).

6. The server (19) as claimed in one of claims 1 to 5, wherein the means for reception are also designed to receive manufacturer information about the tools (18) from further servers of manufacturers of the tools (18), which servers are connected to the communication network (1), and wherein the means for processing are designed to generate the updated information on the basis of the manufacturer information too.

7. The server (19) as claimed in one of claims 1 to 6, wherein the means for reception are also designed to receive service provider information about the tools (18) from further servers of service providers that make changes to the tools (18), which servers are connected to the communication network (1), and wherein the means for processing are designed to generate the updated information on the basis of the service provider information too.

8. The server (19) as claimed in one of claims 1 to 7, wherein the server (19) has means for transmitting the generated updated data to further servers of tool manufacturers for the purpose of updating manufacturer information stored thereon.

9. The server (19) as claimed in one of claims 1 to 8, wherein the database (21; 22) stores software for programming the machine tools (2, 3, 4, 5) and/or the other appliances for the reprocessing of tools (18) and/or workpieces, with the means for processing also being designed to generate software updated on the basis of the updated information, and the server (19) having means for transmitting the updated software to the machine tools (2, 3, 4, 5) and/or the other appliances for the reprocessing of tools (18) and/or workpieces via the communication network (1).

10. The server (19) as claimed in claim 9, wherein the software comprises cut data recommendations, adjustment programs for the machine tools (2, 3, 4, 5) and/or collision consideration models.

11. The server (19) as claimed in one of claims 1 to 10, wherein the updated information generated by the processing means of the server (19) comprises future-oriented statements about the tools (18) used, appropriate tool holders (17) and/or the machine tools (2, 3, 4, 5).

12. The server (19) as claimed in one of claims 1 to 11, wherein the generated, updated information comprises tool lives, frequency of use, period of use, changeover times, cut data, component quality of components manufactured using the tools (18) and/or data about cutting dies used.

13. The server (19) as claimed in one of claims 1 to 12, wherein the means for processing are designed to process the received dynamic information, the static information from the database (21; 22) and/or the operating parameters of the machine tools (2, 3, 4, 5) using a neural network, group formation and/or statistical evaluation.

14. The server (19) as claimed in one of claims 1 to 13, wherein the server (19) has means for transmitting data and information stored in the database (21; 22) and/or the generated updated data to at least one client (25) that is in contact with the server (19) via the communication network (1).

15. The server (19) as claimed in claim 14, wherein the server (19) has means for checking an authorization of the client (25) to access the data and information stored in the database (21; 22) and/or the generated, updated data.

16. The server (19) as claimed in claim 14 or 15, wherein the server (19) has a graphical user interface provided on it that is used to provide the client (25) with access to the data and information stored in the database (21; 22) and/or to the generated, updated data.

17. The server (19) as claimed in one of claims 1 to 16, wherein the server (19) forms a control device for a closed control loop.

18. The server (19) as claimed in claim 17, wherein a control section of the control loop is formed by the machine or the appliance for the use of the tool (18), a measuring device of the control loop is formed by a sensor and/or a model of the tool use and an actuating element of the control loop is formed by a machine or an appliance for manufacturing at least one individual part of a tool of the same type as the tool (18) that is used, with the measuring device capturing data from the tool (18) or the tool holder (17) of the machine tool (2, 3, 4, 5) and/or data from the machine tool (2, 3, 4, 5) and/or dynamic information regarding the tool (18) and transmitting said data as signal variable(s) to the server (19) via the communication network (1), the processing means of the server (19) using the received data or information, using the data stored in the database (21; 22) and using at least one reference variable to ascertain a control difference, and the processing means of the server (19) having a controller that uses the control difference to ascertain a signal variable for the actuating element and transmits said signal variable thereto.

## Revendications

1. Serveur (19) d'un réseau de communication (1), qui est connecté au réseau de communication (1) via une liaison de communication (20) et qui exécute une application de base de données avec accès à une base de données (21; 22) conçue pour collecter et gérer des données, ledit serveur (19) étant en communication via le réseau de communication (1), directement ou indirectement via d'autres serveurs (9) du réseau de communication (1), avec une pluralité de machines (2, 3, 4, 5) ou dispositifs associé(e)s à des sociétés (6, 7, 8) différentes et internes aux sociétés et destiné(e)s à l'utilisation ou au retraitement d'outils (18), **caractérisé par le fait que** les outils (18) sont conçus pour l'usinage à enlèvement de copeaux de pièces à usiner, que les outils (18) comprennent chacun une pluralité d'éléments, dans lequel à au moins certains des éléments sont associées des données d'identification individuelles, que le serveur (19) comprend des moyens de réception de données provenant d'outils (18) des machines (2, 3, 4, 5) ou des dispositifs et/ou d'informations dynamiques relatives aux outils (18), dans lequel les moyens de réception sont conçus pour recevoir des données d'identification individuelles des éléments des outils (18), et le serveur (19) comprend des moyens pour un stockage des données reçues dans la base de données (21, 22), qui est associé aux outils correspondants, que le serveur (19) présente des moyens de traitement des données reçues et d'autres données stockées dans la base de données (21 ; 22) afin de générer des données relatives aux outils (18) et mises à jour, dans lequel le contenu d'information des données mises à jour dépasse la somme du contenu d'information des données reçues et des autres données stockées dans la base de données (21 ; 22), que les moyens de traitement assemblent, en tant que données mises à jour, des outils virtuels correspondant aux outils (18), à partir des éléments correspondant aux données d'identification individuelles mises en mémoire, et que le serveur (19) présente des moyens pour stocker, dans la base de données (21 ; 22), les données mises à jour générées.

2. Serveur (19) selon la revendication 1, **caractérisé par le fait que** la machine ou le dispositif destiné(e) à l'utilisation ou au retraitement d'outils (18) comprend une machine-outil (2, 3, 4, 5) et/ou un autre dispositif de réaffûtage, de revêtement ultérieur, de contrôle, de mesure ou d'évaluation de l'outil (18) et/ou de pièces à usiner.

3. Serveur (19) selon la revendication 1 ou 2, **caractérisé par le fait que** les données reçues des moyens de réception du serveur (19) et relatives à des outils (18) des machines-outils (2, 3, 4, 5) et/ou des autres dispositifs de retraitement d'outils (18) et/ou de pièces à usiner comprennent des données d'identification des outils (18) des machines-outils (2, 3, 4, 5) et/ou des autres dispositifs de retraitement d'outils (18) et/ou de pièces à usiner.

4. Serveur (19) selon la revendication 2 ou 3, **caractérisé par le fait que** les données - reçues des moyens de réception du serveur (19) - des machines-outils (2, 3, 4, 5) et/ou des autres dispositifs de retraitement d'outils (18) et/ou de pièces à usiner comprennent des données d'identification et/ou paramètres de service des machines-outils (2, 3, 4, 5) et/ou des autres dispositifs de retraitement d'outils (18) et/ou de pièces à usiner, des informations de machine typologiques et/ou des informations de pièce à usiner et/ou de matériau.

5. Serveur (19) selon l'une quelconque des revendications 1 à 4, **caractérisé par le fait que** les autres données stockées dans la base de données (21 ; 22) comprennent des informations statiques relatives aux outils (18) et associées aux données reçues du serveur (19).

6. Serveur (19) selon l'une quelconque des revendications 1 à 5, **caractérisé par le fait que** les moyens de réception sont conçus également pour recevoir des informations de fabricant relatives aux outils (18) provenant d'autres serveurs de fabricants des outils (18), qui sont connectés au réseau de communication (1), et que les moyens de traitement sont conçus pour générer les informations mises à jour également en fonction des informations de fabricant.

7. Serveur (19) selon l'une quelconque des revendications 1 à 6, **caractérisé par le fait que** les moyens de réception sont conçus également pour recevoir des informations de prestataire de service relatives aux outils (18) et provenant d'autres serveurs connectés au réseau de communication (1), de prestataires de service qui apportent des modifications aux outils (18), et que les moyens de traitement sont conçus pour générer les informations mises à jour également en fonction des informations de prestataire de service.

8. Serveur (19) selon l'une quelconque des revendications 1 à 7, **caractérisé par le fait que** le serveur (19) comprend des moyens pour transmettre les données mises à jour générées à d'autres serveurs de fabricants d'outils pour mettre à jour des informations de fabricant y stockées.

9. Serveur (19) selon l'une quelconque des revendications 1 à 8, **caractérisé par le fait qu'**un logiciel de programmation des machines-outils (2, 3, 4, 5) et/ou des autres dispositifs de retraitement d'outils (18) et/ou de pièces à usiner est mémorisé dans la base de données (21 ; 22), les moyens de traitement étant conçus également pour générer un logiciel mis à jour sur la base des informations mises à jour, et le serveur (19) présente des moyens de transmission du logiciel mis à jour aux machines-outils (2, 3, 4, 5) et/ou aux autres dispositifs de retraitement d'outils (18) et/ou de pièces à usiner via le réseau de communication (1).

10. Serveur (19) selon la revendication 9, **caractérisé par le fait que** le logiciel comprend des recommandations de données de coupe, des programmes de réglage pour les machines-outils (2, 3, 4, 5) et/ou des modèles d'observation de collision.

11. Serveur (19) selon l'une quelconque des revendications 1 à 10, **caractérisé par le fait que** les informations mises à jour générées par les moyens de traitement du serveur (19) comprennent des renseignements prospectifs relatifs aux outils (18) utilisés, à des porte-outils (17) correspondants et/ou aux machines-outils (2, 3, 4, 5).

12. Serveur (19) selon l'une quelconque des revendications 1 à 11, **caractérisé par le fait que** les informations mises à jour générées comprennent des durées de service d'outil, la fréquence d'utilisation, la durée d'utilisation, les temps de changement, les données de coupe, la qualité de composant de composants fabriqués avec les outils (18) et/ou des données relatives à des plaquettes de coupe utilisées.

13. Serveur (19) selon l'une quelconque des revendications 1 à 12, **caractérisé par le fait que** les moyens de traitement sont conçus pour traiter les informations dynamiques reçues, les informations statiques issues de la base de données (21 ; 22) et/ou les paramètres de service des machines-outils (2, 3, 4, 5) au moyen d'un réseau neuronal, d'une formation de groupe et/ou d'une évaluation statistique.

14. Serveur (19) selon l'une quelconque des revendications 1 à 13, **caractérisé par le fait que** le serveur (19) comprend des moyens de transmission de données et d'informations mémorisées dans la base de données (21 ; 22) et/ou des données mises à jour générées à au moins un client (25) qui est en communication avec le serveur (19) via le réseau de communication (1).

15. Serveur (19) selon la revendication 14, **caractérisé par le fait que** le serveur (19) comprend des moyens de contrôle d'une autorisation du client (25) pour accéder aux données et informations stockées dans la base de données (21 ; 22) et/ou aux données mises à jour générées.

16. Serveur (19) selon la revendication 14 ou 15, **caractérisé par le fait que** sur le serveur (19) est prévue une interface utilisateur graphique via laquelle le client (25) peut accéder aux données et informations stockées dans la base de données (21 ; 22) et/ou aux données mises à jour générées.

17. Serveur (19) selon l'une quelconque des revendications 1 à 16, **caractérisé par le fait que** le serveur (19) forme un dispositif de régulation d'une boucle de régulation fermée.

18. Serveur (19) selon la revendication 17, **caractérisé par le fait qu'**un système asservi de la boucle de régulation est constitué par la machine ou le dispositif d'utilisation de l'outil (18), un dispositif de mesure de la boucle de régulation est constitué par un capteur et/ou un modèle de l'insert d'outil et un actionneur de la boucle de régulation est constitué par une machine ou un dispositif destiné à produire au moins un élément d'un outil du même type que l'outil (18) inséré, dans lequel le dispositif de mesure saisit des données de l'outil (18) ou du porte-outil (17) de la machine-outil (2, 3, 4, 5) et/ou des données de la machine-outil (2, 3, 4, 5) et/ou des informations dynamiques relatives à l'outil (18) et transmet celles-ci en tant que grandeur(s) de signal via ledit réseau de communication (1) au serveur (19), les moyens de traitement du serveur (19) déterminent une différence de régulation à partir des données ou bien informations reçues, à partir des données stockées dans la base de données (21 ; 22) et à partir d'au moins une grandeur de référence, et les moyens de traitement du serveur (19) comprennent un régulateur qui détermine, à partir de la différence de régulation, une grandeur de signal pour l'actionneur et transmet celle-ci à ce dernier.
